(19) Europäisches Patentamt
European Patent Office
Office européen des brevets

(11) Publication number: **0 434 335 A2**

(12) **EUROPEAN PATENT APPLICATION**

(21) Application number: **90313753.7**

(51) Int. Cl.5: **C08F 293/00**, C09J 153/00

(22) Date of filing: **17.12.90**

(30) Priority: **21.12.89 US 454374**

(43) Date of publication of application: **26.06.91 Bulletin 91/26**

(84) Designated Contracting States: **CH DE FR GB IT LI**

(71) Applicant: **MINNESOTA MINING AND MANUFACTURING COMPANY**
**3M Center, P.O. Box 33427**
**St. Paul, Minnesota 55133-3427(US)**

(72) Inventor: **Mahfuza Ali B., c/o Minnesota Mining and Manufact. Co., 2501 Hudson Road, P.O. Box 33427**
**St. Paul, Minnesota 55133-3427(US)**

(74) Representative: **Baillie, Iain Cameron et al**
**c/o Ladas & Parry Isartorplatz 5**
**W-8000 München 2(DE)**

(54) **A method of accelerating photoiniferter polymerization, polymer produced thereby, and product produced therewith.**

(57) The invention relates to an accelerated photoiniferter polymerization method which involves the addition of a polymerization accelerating amount of a at least one metal compound accelerator during the photoiniferter polymerization process.

Preferably, the metal compound or compounds used are represented by the general formula $M_xL_z$ wherein

M is a cation having a valency of z of a metal which is selected from the group consisting of tin, zinc, cobalt, titanium, palladium, and lead;

x is an integer of at least 1;

L is an anion having a valency of x which is selected from the group consisting of $C_{1-20}$ alkyl, -aryl, -OR,

$$-O-\overset{O}{\overset{\|}{C}}-R,\ NO_3^-,$$

$SO_4^=$, and $PO_4^{-3}$;

R is selected from the group consisting $C_{1-20}$ alkyl and aryl; and

z is an integer of at least 1.

Most preferably, the metal compound is selected from the group consisting of stannous 2-ethylhexanoate, zinc 2-ethylhexanoate and mixtures thereof.

EP 0 434 335 A2

# A METHOD OF ACCELERATING PHOTOINIFERTER POLYMERIZATION, POLYMER PRODUCED THEREBY, AND PRODUCT PRODUCED THEREWITH

## Technical Field

This invention relates to the acceleration of a photoiniferter polymerization method, polymers produced by the method, and products produced with the polymers.

## Background

Photoiniferter technology is a recently developed technology which allows for the polymerization of block copolymers from various monomers. An advantage of photoiniferter technology is that it allows for the "tailoring" of block copolymers made therewith. The control of the polymerization provided by the photoiniferter technology permits "tailoring" of the block copolymers formed thereby so that a polymer having a wide spectrum of physical properties can be prepared. Such high precision tailoring is not possible with previously known polymerization methods such as thermal polymerization.

The term "iniferter", or "photoiniferter" as it is also known, refers to a chemical compound that has a combined function of being a free radical initiator, transfer agent, and terminator, the term "iniferter" being a word formed by the underlined portions of the terms identifying these functions. The photo portion of the term indicates that the polymerization is photolytically induced. This term and its use in the production of block copolymers is well known, particularly because of the work of Takayuki Otsu of the Department of Applied Chemistry, Osaka City University, Osaka, Japan. This work is discussed, for example, in an article by Otsu et al entitled "Living Radical Polymerizations in Homogeneous Solution by Using Organic Sulfides as Photoiniferters", Polymer Bulletin, 7, 45-50 (1982), an article by Otsu et al entitled "Living Mono-and Biradical Polymerizations in Homogeneous System Synthesis of AB and ABA Type Block Copolymers", Polymer Bulletin, 11, 135-142 (1984), and in European Patent Application No. 88303058.7, Publication No. 0 286 376, publication date October 12, 1988.

Copending U.S. Application Serial No. 07/356,650, filed May 19, 1989, which is a Continuation-In-Part of U. S. Application Serial No. 07/212,594, Ali, et al., filed June 28, 1988 (assigned to the assignee of the present case) discloses the use of iniferter technology in the preparation of acrylic block copolymers having the requisite physical properties making them suitable for use in pressure-sensitive adhesive compositions. The control of the polymerization permits tailoring of the reinforced acrylic block copolymer to provide a balance of adhesion, cohesion, stretchiness and elasticity to make a successful pressure-sensitive adhesive.

Copending U.S. Application Serial No. 07/212,593, filed June 28, 1988, Andrus Jr. et al., (also assigned to the assignee of the present case) discloses the use of iniferter technology in the preparation of acrylic block copolymers which can be tailored to provide optical clarity and resistance to oxidative and photochemical degradation which are employed to make shaped articles, sheet materials, and the like.

Copending U.S. Application Serial No. 07/393,550, filed August 14, 1989, Kumar, et al. provides novel siloxane iniferter compounds which can be used in making tailor-made vinyl-siloxane block copolymers. The control of the polymerization provided by the novel siloxane iniferter compounds permits "tailoring" of the vinyl-siloxane block copolymers so that a wide spectrum of physical properties can be introduced.

Copending U.S. Application Serial No. 07/393,557, filed August 14, 1989, Kumar, et al., discloses flexible substrates coated with a release coating comprising the vinyl-siloxane block copolymers prepared according to copending U.S. Application Serial No. 07/393,550.

While photoiniferter technology provides a unique way to make precisely tailored block copolymers which cannot be made by conventional techniques, such photopolymerization reactions can sometimes take an extended period of time to occur. Reaction times on the order of 2 to 50 hours, depending upon the components used, with the majority of reactions requiring 24 hours or more have been found to be typical, depending upon the intensity of the radiation with faster reaction times being observed at greater intensities. None of the above references disclose or suggest any methods of accelerating the photoiniferter polymerization processes.

Okuzuwa, Hirai and Hakishima, Journal of Polymer Science, Volume 7, 1039-1053, 1969, discusses the thermal polymerization of acrylates and methacrylates with AIBN (azo-isobutyronitrile) in the presence of $ZnCl_2$ and $SnCl_4$. The thermal polymerizations of Okuzuwa are conducted in bulk since, according to Okuzuwa, $ZnCl_2$ acts as a complexing agent with methyl methacrylate (MMA) resulting in a decrease in activation energy. No solvent was found which dissolved the complex without causing its dissociation. Thus, no polymerization rate acceleration was observed in the presence of solvents.

Levens U.S. Patent No. 4,421,822 (assigned to the assignee of the present case) teaches that the conventional photopolymerization of acrylates in solution or in film can be carried out in the presence of oxygen wherein oxidizable tin salts are added. However, rate enhancement in the absence of oxygen is not discussed. Moreover, no data is provided on the extent of rate enhancement in the presence and absence of oxidizable tin salts. Furthermore, Levens does not teach or suggest the use of such oxidizable tin salts as accelerators in photoiniferter polymerizations.

A need therefore exists for an accelerated photoiniferter polymerization technique which can substantially increase the reaction rate of photoiniferter polymerization reactions resulting in a more time-efficient photoiniferter polymerization process.

## Brief Description of the Invention

We have found an accelerated method of preparing block polymers and copolymers which involves the addition of a polymerization accelerating amount of a metal compound accelerator during the photoiniferter polymerization process.

The invention relates to a method of making a polymer or copolymer which comprises mixing (i) an iniferter represented by the general formula $I(T)_n$, capable upon being subjected to an appropriate energy source of forming a terminator free radical of the formula $nT^\bullet$ and an initiator free radical of the formula $I(^\bullet)_n$ wherein n is an integer of at least 1, wherein the initiator free radical $I(^\bullet)_n$ is a highly reactive free radical capable of initiating free radical polymerization, and the terminator free radical $T^\bullet$ is a less reactive free radical which is generally much less capable of initiating free radical polymerization of free radically polymerizable monomer but capable of rejoining with $I(^\bullet)_n$ or a free radical polymer segment free radically polymerized with $I(^\bullet)_n$ upon termination of the energy source and (ii) a first monomer charge comprising free radically polymerizable monomer, in order to form a first mixture;

exposing the mixture to an energy source capable of forming free radicals $I^\bullet$ and $nT^\bullet$;

maintaining the exposure until the free radically polymerizable monomer of the first monomer charge polymerizes with $I^\bullet$ to form a free radical polymer segment represented by the formula $IA'^\bullet$;

wherein A' comprises a polymer block comprising polymerized free radically polymerizable monomer of the first monomer charge;

terminating the exposure, whereby $I(A'^\bullet)_n$ and $nT^\bullet$ combine to form a polymer represented by the formula $I(A'T)_n$ or alternatively maintaining the exposure of $I(A'^\bullet)_n$ and $nT^\bullet$ to the energy source;

optionally mixing $I(A'T)_n$ or mixing $I(A'^\bullet)_n$ and $nT^\bullet$ with a second monomer charge comprising free radically polymerizable monomer in order to form a second mixture;

exposing the mixture of $I(A'T)_n$ and the second monomer charge to an energy source capable of forming free radicals $I(A'^\bullet)_n$ and $nT^\bullet$, or alternatively maintaining the exposure of $I(A'^\bullet)_n$ and $nT^\bullet$ which is mixed with the second monomer charge, to the energy source;

maintaining the exposure until the free radically polymerizable monomer of the second monomer charge polymerizes with the free radical $I(A'^\bullet)_n$ to form a free radical copolymer segment represented by the formula $I(A'A''^\bullet)_n$ wherein A" comprises a polymer block comprising polymerized free radically polymerizable monomer of the second monomer charge;

and terminating the exposure whereby $I(A'A''^\bullet)n$ and $nT^\bullet$ combine to form a copolymer represented by the formula $I(A'A''T)_n$:

wherein the improvement comprises adding a polymerization accelerating amount of at least one metal compound which is capable of accelerating the free radical polymerization wherein the metal compound is present during the polymerization of at least one monomer charge, and wherein said metal compound does not interact with said free radically polymerizable monomer of said first monomer charge or said free radically polymerizable monomer of said second monomer charge in order to form an insoluble compound in an amount which would substantially interfere with the free radical polymerization of said free radically polymerizable monomer of said first monomer charge or said free radically polymerizable monomer of said second monomer charge.

The resultant polymer is characterized by having the formula $I(A'A''_yT)_n$ where I,A', A", T and n are defined above and y is zero or 1, and by including residual metal compound accelerator.

## Drawings

Fig. 1 compares the rates of polymerization obtained for butyl acrylate (BA) in the absence of an accelerator metal compound (line A), in the presence of accelerator metal compound tin octanoate [$Sn(Oct)_2$] (line B), and in the presence of accelerator metal compounds tin octanoate [$Sn(Oct)_2$] and zinc octanoate

[Zn(Oct)2] (line C) according to Examples 6-8.

Fig. 2 compares the rates of polymerization of BA obtained during conventional photopolymerizations in the presence of $Sn(Oct)_2$ (line D) and in the absence of $Sn(Oct)_2$ (line E) according to Example 19.

## Detailed Description of the Invention

### I. Accelerated Photoiniferter Polymerization

Thus, the present invention relates to the use of at least one metal compound accelerator during a photoiniferter polymerization reaction in order to dramatically increase the polymerization reaction rate.

Useful metal compounds include but are not limited to those of general formula $M_xL_z$ wherein
M is a cation having a valency of z of a metal which is selected from the group consisting of tin, zinc, cobalt, titanium, palladium, and lead;
x is an integer of at least 1;
L is an anion having a valency of x which is selected from the group consisting of $C_{1-20}$ alkyl, -aryl, -OR,

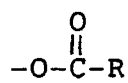

$NO_3^-$, $SO_4^=$, and $PO_4^{-3}$ ;
R is selected from the group consisting $C_{1-20}$ alkyl and aryl; and
z is an integer of at least 1.

Suitable metal compound accelerators include but are not limited to the following: $Sn_xL_z$, $Co_xL_z$, $Zn_x L_z$, $Ti_x L_z$, $Pb_x L_z$ , $Pd_x L_z$, etc. and mixtures thereof.

Examples of specific metal compound accelerators include: $(C_4H_9)_2Sn(OCH_3)_2$, $(C_4H_9)_2Sn(OOCCH_3)_2$, $(C_4H_9)_3SnOOCCH_3$, cobalt octanoate, lead disulfone, $Zn(Oct)_2$, tin octanoate, etc.

Most preferably, the metal compound is selected from the group consisting of stannous 2-ethylhexanoate, [$Sn(Oct)_2$], zinc 2-ethylhexanoate, [$Zn(Oct)_2$], and mixtures thereof, for reasons of their high solubility in organic solvents and the very high acceleration rate obtained therewith.

The metal compound should be present in an amount sufficient to accelerate the polymerization of the free radically polymerizable monomer. Preferably, about 0.1 to about 10 mole % of metal compound is used based upon the monomer charge to which the metal compound is added in order to obtain a high rate of acceleration. Most preferably, about 1 to about 3 mole % of metal compound is used based upon the monomer charge to which the metal compound is added, for reasons of optimum acceleration and optimum performance of the final polymer. The metal compound accelerator used should be soluble in any organic solvent used or in free radically polymerizable monomer.

Above about 3 mole % of metal compound results in a plasticizing effect which is not desirable for some applications, but which could be desirable for certain applications such as pressure sensitive adhesive compositions. Also, the use of above about 3 mole % of metal compound has not been found to increase the acceleration rate to a greater extent than 3 mole %. The use of above about 10 mole % of metal compound accelerator results in the absorption of radiation from the radiant energy source, thus causing interference with the polymerization process.

According to the above described accelerated photoiniferter polymerization reaction either a first monomer charge or both a first monomer charge and a second monomer charge can be used in forming the polymer. When only a first monomer charge is used a polymer represented by the formula $I(A'T)_n$ is formed. When both a first monomer charge and a second monomer charge are used a copolymer represented by the formula $I(A'A''T)_n$ is formed. The first monomer charge can comprise one or more types of free radically polymerizable monomer compound. Similarily, the second monomer charge can comprise one or more types of free radically polymerizable compound.

An accelerator compound is present, of course, when only a first monomer charge is used in order to accelerate the polymerization reaction. If both a first monomer charge and second monomer charge are used a polymerization accelerating amount of an accelerator metal compound may be present during the polymerization of the first monomer charge, the second monomer charge, or both the first monomer charge and the second monomer charge. The stage or stages at which the accelerator compound is added depends upon a number of factors such as the reactivity and structure of the monomer which is being polymerized. In the case of two monomer charges, the metal compound accelerator is preferably added to the monomer charge comprising the less reactive monomer. In both the cases wherein one or two

monomer charges are used, the accelerator compound is preferably added all at once rather than gradually in order to minimize interruption of the polymerization reaction.

In order to conduct the accelerated photoiniferter polymerization, the reactants, including the photoiniferter, free radically polymerizable monomer, and any solvent employed, are charged into an energy source-transparent vessel and therein subjected to the energy source. The reactants can be charged into the vessel in any order. Preferably, however, the solvent, photoiniferter, and monomer are combined to form a mixture prior to the addition of the metal compound accelerator. Most preferably, a mixture is formed by dissolving the photoiniferter in the solvent prior to the addition of the monomer charge. This is followed by the addition of the metal compound accelerator.

If only a first monomer charge is to be used, a polymerization accelerating amount of accelerator metal compound is added to the vessel as indicated above. If both a first monomer charge and second monomer charge is used a polymerization accelerating amount of the accelerator metal compound can be added to the vessel so that it is present during the polymerization of the first monomer charge or it can be added later so that it is present during the polymerization of the second monomer charge. Alternatively, an excess of accelerator metal compound can be added so that it is present during the polymerization of the first monomer charge and the second monomer charge.

The reaction is preferably conducted in a vessel with agitation to permit uniform exposure of the reactants to the energy source. While most of the reactions have been conducted by employing a batch process, it is possible to utilize the same technology in a continuous polymerization operation.

The reaction mixture may include a suitable inert solvent but it is not necessary since some of the monomeric materials are liquid themselves and may thus be charged into the reaction vessel without utilization of a solvent.

In the situation wherein two monomer charges are used, preferably the $I(A'T)_n$ block polymer formed from the first monomer charge, solvent, and second monomer charge are combined prior to the addition of the metal compound accelerator if the metal compound accelerator is used during the polymerization of the second monomer charge.

The solvent, if utilized in the free radical polymerization, may be any substance which is liquid in a temperature range of about -10 °C to about 50 °C, is substantially transparent to the energy source employed to permit dissociation of the iniferter to form free radicals, is inert to the reactants and product, and will not otherwise adversely affect the reaction. Suitable solvents include water, toluene, alkyl acetates such as ethyl acetate, alkanes such as hexane or heptane, and alcohols such as methyl alcohol, ethanol, isopropyl alcohol, and mixtures of one or more of these. Other solvent systems are useful. The amount of solvent is generally about 30 to 80 percent by weight based on the total weight of the reactants and solvent. In addition to solution polymerization herein described, the polymerization may be carried out by other well known techniques such as suspension, emulsion and bulk polymerization.

The particular energy source and its intensity are selected to result in dissociation of the iniferter to free radicals. When employing a photoiniferter which will dissociate upon exposure to ultraviolet light radiation, an ultraviolet light source is utilized. When employing a photoiniferter which will dissociate upon exposure to visible light radiation, a visible light source is utilized. A visible light source is preferably used since it is more convenient and is considered less hazardous. The intensity and rate of radiation is chosen so that it will advance the polymerization at a reasonable rate without deleteriously affecting the polymer segment being produced. A light source having a wavelength on the order of 200 to 800 nm spaced approximately 10 cm from the reactants to provide an exposure of 2 milliwatts per square centimeter has been found to produce suitable results. If the energy source is ultraviolet radiation, a suitable ultraviolet light transparent vessel is utilized.

In the presence of a polymerization accelerating amount of at least one metal compound, reaction times have been found to range from about 0.2 to about 5 hours, typically about 2.4 to about 5 hours for the majority of cases for the preparation of $I(A'T)_n$ and $I(A'A''T)_n$ depending upon the type of monomer used.

The iniferter is caused to dissociate to form free radicals by exposure to an appropriate energy source. The preferred iniferter is one which will dissociate upon exposure to a radiant energy source. The amount of iniferter used depends upon the molecular weight of the polymer desired. The more iniferter used, the lower the molecular weight of the resultant polymer.

Upon exposure to the energy source, the iniferter dissociates to form free radicals which promote free radical polymerization. Upon completion of the free radical polymerization of the free radically polymerizable monomer, the energy source is discontinued to permit the free radically polymerized segments to recombine with the terminator portion of the iniferter to form polymer segments. A second monomer charge may then be introduced if desired, which is free radically polymerizable to the block A', and the new mixture is exposed to the energy source to cause dissociation of the terminator radical and free radical

polymerization of the second monomer charge onto the first polymer segment, that now being the initiator of the second free radical polymerization. Upon completion of polymerization of the second monomer charge, the energy source is terminated and the terminator portion of the iniferter recombines with the polymer block to provide a block copolymer of the formula $I(A'A''T)_n$.

The accelerated photoiniferter polymerization method of the present invention can be used in the preparation of a variety of copolymers including, but not limited to, acrylic block copolymers useful as toughened thermoplastics, acrylic block copolymers useful as pressure sensitive adhesives, vinyl siloxane copolymers, etc..

The use of accelerator metal compounds in the preparation of shaped dental articles comprising certain acrylic block copolymers is described in copending, concurrently filed U.S. Patent Application entitled "Dental Compositions, A Method of Making Shaped Dental Articles Via Photoiniferter Polymerization of the Dental Compositions, and Shaped Dental Articles Produced Thereby", Mitra et al., Serial No. 454,176, Attorney's Docket Number 43780USA1A.

I.A. Accelerated Photoiniferter Polymerization of Acrylic Block Copolymers Useful as Toughened Thermoplastics

The metal compound accelerator can be used according to the method of the present invention to accelerate the polymerization of the acrylic block copolymers prepared by the use of iniferter technology in copending U.S. Application Serial No. 212,593, Andrus Jr., et al.

The method is similar to that described above wherein with respect to the iniferter $I(T)_n$, n is an integer of at least 2 and the first monomer charge is selected from the group consisting of (i) acrylic monomer polymerizable to form an acrylic polymer block having a glass transition temperature of less than 0 °C and (ii) monomer polymerizable to form a thermoplastic polymer block having a glass transition temperature of at least 50 °C which is free radically polymerizable in the presence of $(I^\bullet)_n$ to form a first polymer block; and wherein a second monomer charge is added, wherein the second monomer charge is a member of the group consisting of monomer (i) and monomer (ii) which was not selected as the first monomer charge, the second monomer charge comprising monomer which is free radically polymerizable in the presence of $I\text{-}(A'^\bullet)_n$ to form a second polymer block.

The invention also relates to sheet materials containing the copolymer formed according to the above accelerated method.

The most preferred iniferters for producing the ABA block copolymers (wherein A = A" and B = A') are selected from the group consisting of xylylene bis (N,N-diethyl dithiocarbamate) and xylylene bis (N-carbazolyl dithiocarbamate).

The preferred block copolymers are those wherein n is an integer of 2 to 12, most preferably 2 to 6. The preferred weight ratio of acrylic polymer block to thermoplastic polymer block in the copolymer is from about 5:95 to 40:60, most preferably 10:90 to 30:70.

Preferred block copolymers have an elastomeric block which is formed of monomer comprising from about 75 to 100 percent by weight of at least one monomeric acrylic or methacrylic acid ester of a non-tertiary alcohol, the alcohol having from 1 to 14 carbon atoms with the average number of carbon atoms being 4 to 12. Preferred monomeric acrylic or methacrylic acid ester is selected from the group consisting of 2-butyl acrylate, isooctyl acrylate, 2-ethylhexyl acrylate, 2-methylbutyl acrylate and n-butyl acrylate.

The preferred monomeric material from which the polymer block is formed is selected from the group consisting of methyl methacrylate, polystyrylethyl methacrylate macromer, methyl methacrylate macromer, acrylic acid, acrylonitrile, isobornyl methacrylate, N-vinyl pyrrolidone, t-butyl methacrylate, isopropyl methacrylate, and mixtures thereof.

The preferred block copolymers according to the present invention include those which may be represented by the general formula

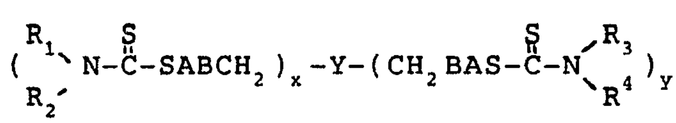

wherein

$R_1$, $R_2$, $R_3$ and $R_4$ are aliphatic, aromatic, or substituted aromatic moieties (preferably $C_{1-4}$ aliphatic moieties), which can be the same or different and which do not substantially interfere with the ability of $I^\bullet$ to

promote free radical polymerization or with T• to recombine with I• or a polymer free radical segment including I•;

Y is a linking group having a functionality of x+y which does not substantially interfere with the ability of I• to promote free radical polymerization or the ability of T• to recombine with I• or a polymer free radical segment including I•; and

x and y are each integers of at least 1 and the sum of x+y is not more than 12.

The most preferred block copolymers according to the invention are those represented by the formula

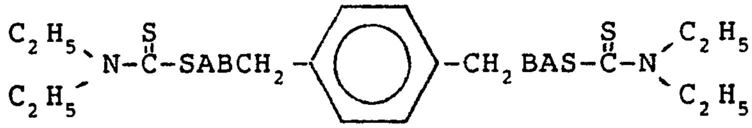

The acrylic monomer of the elastomeric block as previously mentioned, is a monomeric acrylic or methacrylic acid ester of a non-tertiary alcohol, said alcohol having from 1 to 14 carbon atoms with the average number of carbon atoms being about 4-12. Examples of such monomers include the esters of acrylic acid or methacrylic acid with non-tertiary alkyl alcohols such as 1-butanol, 1-pentanol, 2-pentanol, 3-pentanol, 2-methyl-1-butanol, 1-methyl-1-butanol, 1-methyl-1-pentanol, 2-methyl-1- pentanol, 3-methyl-1-pentanol, 2-ethyl-1-butanol, 3, 5,5-trimethyl-1-hexanol, 2-ethyl hexanol, 3-heptanol, 2-octanol, 1-decanol, 1-dodecanol, and the like. Such monomeric acrylic or methacrylic esters are known in the art and many are commercially available.

The elastomeric block may include as a comonomer a macromolecular monomer, sometimes referred to as a "macromer". Such a monomer may also be included in the thermoplastic polymer block as a comonomer. Such a monomer is a polymeric material having a copolymerizable vinyl group with which the acrylic monomer and other monomers (if more than one is used) will copolymerize under the polymerization conditions.

The vinyl-terminated polymeric monomers useful in the present invention are known and may be prepared by the method disclosed by Husman et al, U.S. Pat. No. 4,554,324. The most preferred macromolecular monomers include polystyrylethyl methacrylate macromer and polymethyl methacrylate macromer.

According to Husman, such monomers are known and may be prepared by the method disclosed by Milkovich et al as described in U.S. Pat. Nos. 3,786,116 and 3,842,059. As disclosed therein, vinyl-terminated polymeric monomer is prepared by anionic polymerization of a polymerizable monomer to form a living polymer. Such monomers include those having an olefinic group, such as the vinyl-containing compounds. Living polymers are conveniently prepared by contacting the monomer with an alkali metal hydrocarbon or alkoxide salt in the presence of an inert organic diluent which does not participate in or interfere with the polymerization process. Monomers which are susceptible to anionic polymerization are well known. Illustrative species include vinyl aromatic compounds such as styrene, alpha-methylstyrene, vinyltoluene and its isomers. Other monomers susceptible to anionic polymerization are also useful.

The initiators for anionic polymerization may be any of the alkali metal hydrocarbons or alkoxide salts which produce a mono-functional living polymer, i.e., only one end of the polymer contains a reactive ion. Such initiators include the hydrocarbons of lithium, sodium or potassium, for example, having an alkyl radical containing up to 20 carbon atoms or more, and preferably up to 8 carbon atoms. Illustrative alkali metal hydrocarbons include ethyl sodium, propylsodium, butylpotassium, octyl-potassium, phenylsodium, ethyllithium, buytllithium, sec-butyllithium, isobutyllithium, tertbutyllithium and 2-ethylhexyllithium. Sec-butyllithium is the preferred initiator.

The inert organic diluent utilized to facilities heat transfer and adequate mixing of the initiator and monomer preferably is a hydrocarbon or an ether. Useful diluents include saturated aliphatic and cycloaliphatic hydrocarbons such as hexane, heptane, octane, cyclohexane and the like. In addition, aliphatic and cyclic ether solvents may be used, for example, dimethyl ether, diethyl ether, and tetrahydrofuran.

The amount of initiator usually dictates the molecular weight of the living polymer. If a small portion of initiator is used, with respect to the amount of monomer, the molecular weight of the living polymer will generally be larger than if a large portion of initiator is used. It is generally advisable to add initiator dropwise to the monomer until the persistence of the characteristic color of the organic anion is observed, then the calculated amount of the initiator is added for the molecular weight desired. The preliminary dropwise addition serves to destroy contaminants and thus permits better control of the polymerization.

Generally, the initiator concentration can vary from about 0.01 to about 0.1 mole of active alkali metal per mole of monomer, or higher. Preferably, the concentration of the initiator will be from about 0.01 to about 0.04 mole of active alkali metal per mole of monomer.

The temperature of the polymerization will depend upon the monomer. Generally, the reaction can be carried out at a temperature ranging from about -100° C. up to about 100° C.

The anionic polymerization must be carried out under controlled conditions so as to exclude substances which destroy the initiator or living anion. Water and oxygen must be excluded. The polymerization therefore is carried out under anhydrous conditions in an inert atmosphere such as nitrogen, helium or argon.

The living polymers may be terminated in several ways. It is important, however, that conditions be selected to provide a quantitative termination free from side reactions. Under certain conditions the living polymeric anion may be allowed to react directly with halogen-containing terminating agents to produce, for example, vinyl-terminated polymeric monomers. In many cases, however, the polymeric anion is highly reactive and non-selective in its reaction with the terminating agent. In addition to displacement of the halogen atom, it may abstract hydrogen atoms or react with other functional groups present, including the vinyl group itself. This results in polymer chains which are non-functional or of unwanted functionality and molecular weight. Occasionally, under these conditions, a vinyl-terminated polymer may be attached by living anion and its functionality destroyed.

One means for overcoming the foregoing problem is to render the living anion less reactive, thus less susceptible to side reactions, by "capping" with a less reactive end group prior to actual termination. Examples of suitable "capping agents" include lower alkylene oxides such as ethylene and propylene oxide, and 1,1-diphenyl-ethylene, etc. A preferred capping agent is an alkylene oxide, such as ethylene oxide. The capping agent reacts with the living polymer, destroying its oxirane ring. The alkoxide anion then displaces the halogen atom of the terminating agent selectively, leaving the vinyl group intact.

The capping reaction is carried out quite simply, as in the case of the terminating reaction, by adding the capping reactant to the living polymer at the polymerization temperature. The reaction occurs immediately. As in the case of the termination reaction, a slight molar excess of the capping reactant with respect to the amount of initiator may be used. The reaction occurs on a mole for mole basis. This reaction is described in Milkovich, U.S. Pat. No. 3,842,059. According to U.S. Pat. No. 3,842,059, reaction with the terminating agent provides the desired vinyl-terminated polymeric monomer.

A second method of termination, also useful for synthesis of the vinyl-terminated polymeric monomers, involves capping the living anion performed as described previously, and then protonating the alkoxide ion to produce a hydroxyl-terminated polymer. The hydroxyl group is then allowed to react with a terminating agent containing an isocyanate group (instead of a halogen atom) to produce the vinyl termination. Suitable terminating agents for this reaction are isocyanato alkyl acrylates and methacrylates having 1 to 4 carbon atoms in the alkyl group. The hydroxyl and isocyanato groups react to form a urethane linkage between the polymeric segment and the "monomeric" end group. Intermediate protonation of the alkoxide is necessary to prevent unwanted side reactions upon termination.

Although U.S. Pat. No. 3,786,116 teaches that the molecular weight distribution of the polymer chains of the vinyl-terminated polymericmonomer prior to copolymerization must be narrow, i.e., less than 1.1 polydispersity, it has been found that useful psa compositions according to the present invention may employ polymeric monomer having a polydispersity of up to about 3 without deleterious effects on the adhesive properties. These broader molecular weight distributions may be obtained by known variations in temperature of polymerization and the lithium alkali initiator used.

The vinyl-terminated polymeric monomers useful in the present invention may also be prepared by free-radical polymerization (rather than anionic polymerization). Known methods can be used to prepare semi-telechelic polymers using thermal free-radical initiators. An illustrative method is described in Y. Yamashita, K. Ito, H. Mizuno and H. Okada, Polymer Journal 14, 255-260 (1982) and K. Ito, N. Usami, and Y. Yamashita, Macromolecules 13,216-221 (1980). These functional polymers can then be converted into vinyl-terminated monomers using standard condensation chemistry, ring opening reactions, etc. Specifically, carboxylic-acid terminated low molecular weight polystyrene can be prepared using 4,4'-azobis-(4-cyanovaleric acid) as an initiator and an acid-containing chain transfer agent such as $HS-CH_2-COOH$. The semi-telechelic polystyrene can then be vinyl terminated via, for example, ring opening of glycidyl methacrylate. These vinyl-terminated polymers have a high polydispersity.

It should be understood that minor amounts of the monomer forming the B block, the monomer forming the A block, or both may be present as a homopolymer in the copolymer thermoplastic composition of the invention. Such minor amounts of homopolymer may be produced in an unwanted side reaction during polymerization of the copolymer. Such amounts will typically be less than 10 parts by weight of all

homopolymer based upon 100 parts by weight of copolymer.

The copolymer may, when necessary or desirable, be blended with a compatible modifier in order to optimize physical properties. The use of such modifiers is common in the art. For example, it may be desirable to include such materials as pigments, fillers, stabilizers, or various polymeric additives.

The copolymers prepared in accordance with the present invention are easily shaped by conventional techniques and equipment to produce shaped articles, sheet goods, or other useful shapes.

It should be noted that, while the polymers of the present invention have improved toughness without subsequent cross-linking, if necessary, further solvent resistance and resistance to photochemical or oxidative forces may be obtained by cross-linking by employing radiant energy or chemical procedures.

## I.B. Accelerated Photoiniferter Polymerization of Acrylic Block Copolymers Useful as Pressure Sensitive Adhesives

The metal compound accelerator can also be used according to the method of the present invention to accelerate the polymerization of acrylic block copolymers having the requisite physical properties making them suitable for use in pressure sensitive adhesive compositions prepared by the use of iniferter technology in copending U.S. Application, Serial No. 07/212,594, Ali, et al.

This particular accelerated method is similar to the general acceleration method described above wherein said iniferter is represented by the general formula $I(T)_n$ wherein n is an integer of at least 2 and wherein the first monomer charge comprises acrylic monomer which is free radically polymerizable in the presence of $I(\bullet)_n$ to form an acrylic polymer block having a glass transition temperature of less than 0 °C;
and the second monomer charge comprises monomer which is free radically polymerizable in the presence of $I(A'\bullet)_n$ to form a thermoplastic block having a glass transition temperature of at least 30 °C;
and sufficient compatible tackifier is blended with the second monomer charge, $I(A'\bullet)_n$ and nT or $I(A'A''T)_n$ in order to endow $I(A'A''T)_n$ with adhesive tack.

The most preferred iniferters for producing the ABA block copolymers (wherein A=A" and B=A') according to the accelerated method of present invention are selected from the group consisting of xylylene bis (N,N-diethyl dithiocarbamate) and xylylene bis (N-carbazolyl dithiocarbamate).

The PSA compositions comprise reinforced acrylic ABA block copolymer of the formula $I(BAT)_n$, as previously defined, and adhesive tackifier. If tackifier is employed, the amount is selected to provide sufficient adhesive tack to make the composition useful as a PSA. This amount would typically be on the order of 0 to 150 parts by weight per 100 parts ABA block copolymer.

The preferred block copolymers for use in PSA compositions are those wherein n is an integer of 2 to 12, most preferably 2 to 6. The preferred weight ratio of B block to A block in the copolymer for pressure-sensitive adhesive compositions is from about 90:10 to 70:30.

Preferred block copolymers for PSA compositions have an elastomeric block which is formed of monomer comprising from about 75 to 100 percent by weight of at least one monomeric acrylic or methacrylic acid ester of a non-tertiary alcohol, the alcohol having from 1 to 14 carbon atoms with the average number of carbon atoms being 4 to 12, and from 0 to about 25 percent by weight of at least one polar monomer copolymerizable with the monomeric acrylic or methacrylic acid ester. Most preferably, the polar monomer is from about 1 to about 20 parts by weight of the total weight of the acrylic block. Preferred monomeric acrylic or methacrylic acid ester is selected from the group consisting of isooctyl acrylate, 2-ethylhexyl acrylate, 2-methylbutyl acrylate and butyl acrylate.

The preferred polar monomers are selected from the group consisting of acrylic acid, methacrylic acid, itaconic acid, acrylamide, methacrylamide, acrylonitrile, methacrylonitrile, N-vinylpyrrolidone, and polyethylene oxide acrylate.

The preferred monomeric material from which the A block is formed is selected from the group consisting of methyl methacrylate, polystyrylethyl methacrylate macromer, methyl methacrylate macromer, acrylic acid, acrylonitrile, isobornyl methacrylate, N-vinyl pyrrolidone, and mixtures thereof.

The preferred block copolymers may be represented by the general formula

$$\left(\begin{matrix}R_1\\R_2\end{matrix}>N-\overset{S}{\overset{\|}{C}}-SABCH_2\right)_x-Y-\left(CH_2BAS-\overset{S}{\overset{\|}{C}}-N<\begin{matrix}R_3\\R^4\end{matrix}\right)_y$$

wherein

$R_1$, $R_2$, $R_3$ and $R_4$ are aliphatic, aromatic, or substituted aromatic moieties (preferably $C_{1-4}$ aliphatic moieties), which can be the same or different and which do not substantially interfere with the ability of I• to promote free radical polymerization or with T• to recombine with I• or a polymer free radical segment including I•;

Y is a linking group having a functionality of x + y which does not substantially interfere with the ability of I• to promote free radical polymerization or the ability of T• to recombine with I• or a polymer free radical segment including I•; and

x and y are each integers of at least 1 and the sum of x + y is not more than 12.

The most preferred block copolymers according to the invention are those represented by the formula

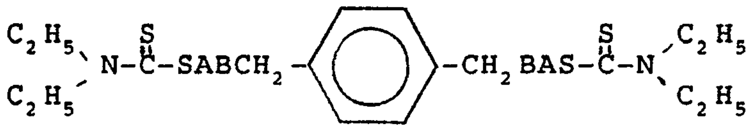

The acrylic monomer of the elastomeric block as previously mentioned, is a monomeric acrylic or methacrylic acid ester of a non-tertiary alcohol, said alcohol having from 1 to 14 carbon atoms with the average number of carbon atoms being about 4-12. Examples of such monomers include the esters of acrylic acid or methacrylic acid with non-tertiary alkyl alcohols such as 1-butanol, 1-pentanol, 2-pentanol, 3-pentanol, 2-methyl-1-butanol, 1-methyl-1-butanol, 1-methyl-1-pentanol, 2-methyl-1- pentanol, 3-methyl-1-pentanol, 2-ethyl-1-butanol, 3,5,5-trimethyl-1-hexanol, 2-ethyl hexanol, 3-heptanol, 2-octanol, 1-decanol, 1-dodecanol, and the like. Such monomeric acrylic or methacrylic esters are known in the art and many are commercially available.

As mentioned above, the elastomeric block may include up to 25 percent by weight of a polar monomer which is copolymerizable with the monomeric acrylic or methacrylic acid ester. Preferred monomers are acrylic acid, methacrylic acid, itaconic acid, acrylamide, N-vinyl pyrrolidone, methacrylamide, acrylonitrile and methacrylonitrile. The polar monomer is not necessary to produce the claimed PSA compositions but up to 25 percent of the total weight of all monomers of elastomeric block may be included. The preferred PSA composition according to the present invention will contain from 1 to 20 percent by weight of polar monomer of the total weight of the elastomeric block.

The polar monomer may be a macromolecular monomer, sometimes referred to as a "macromer". Such a monomer may also be included in the thermoplastic B polymer block. Such a monomer is a polymeric material having a copolymerizable vinyl group with which the acrylic monomer and other polar monomers (if more than one is used) will copolymerize under the polymerization conditions.

The vinyl-terminated polymer monomer, once polymerized with the acrylic monomer and other polar monomer, if used, forms an elastomeric polymer block having pendant polymeric moieties which also tend to reinforce the otherwise soft acrylic block, providing a substantial increase in the shear strength of the resultant copolymer adhesive composition. The amount of polymeric monomer is selected to optimize the shear strength value depending upon the intended use of the PSA composition. An excessive quantity of polymeric monomer makes the resultant copolymer overly reinforced, decreasing its adhesive tack and making it more like a polymeric film rather than an adhesive composition.

The vinyl-terminated polymeric monomers useful in the present invention are known and may be prepared by the method disclosed by Husman et al, U.S. Pat. No. 4,554,324. The most preferred macromolecular monomers include polystyrylethyl methacrylate macromer and polymethyl methacrylate macromer.

It should be understood that minor amounts of the monomer forming the B block, the monomer forming the A block, or both may be present as a homopolymer in the copolymer adhesive composition of the invention. Such minor amounts of homopolymer may be produced in an unwanted side reaction during polymerization of the copolymer. Such amounts will typically be less than 10 parts of all homopolymer based upon 100 parts of copolymer.

The adhesive copolymer compositions prepared in accordance with the present invention are easily coated upon suitable flexible or inflexible backing materials by conventional coating techniques to produce adhesive coated sheet materials in accordance with the present invention. The flexible backing material may be any material conventionally utilized as a tape backing or any other flexible material.

Certain PSA compositions according to the invention possess excellent moisture vapor transmission (MVT) properties, making them particularly useful as the PSA of adhesive tapes for use on skin. Such PSA tape constructions preferably have a moisture vapor transmittance (MVT) of at least 750 grams per square

meter measured over a 24 hour period when measured according to ASTM E-9680 (based on a modified Payne Cup Method) when coated on a highly porous backing which has an MVT of at least 10,000 grams per meter per 24 hours. Such PSA compositions comprise copolymer according to the invention which includes in the elastic B block polar comonomer which renders the elastic B block hydrophilic. Such monomers may include polyethylene oxide acrylate, N-vinylpyrrolidone, and the like and mixtures thereof. The amount of such comonomer is sufficient to endow the copolymer with a hydrophilic nature to make it suited for use as a skin adhesive. Such amounts typically vary from about 2 to about 40 parts of such comonomer based uppon the total monomer weight in the elastomeric B block.

The copolymerization of the acrylic monomer, polar monomer, if used, and monomer to produce the thermoplastic block is by step-wise free radical polymerization. The acrylic monomer and polar monomer, if used, are dissolved in a suitable inert solvent, if needed, and polymerized by a first free radical polymerization utilizing a suitable iniferter as a free radical initiator source. Generally, from about 0.01 to about 5 percent by weight of iniferter based upon the total weight of polymerizable composition is used.

The iniferter is caused to dissociate to form free radicals by exposure to an appropriate energy source. The preferred iniferter is one which will dissociate upon exposure to a radiant energy source, most preferably an ultraviolet radiant energy source. Upon exposure to the energy source, the iniferter dissociates to form free radicals which promote free radical polymerization. Upon completion of the free radical polymerization of the acrylic monomer and polar monomer, if used, the energy source is discontinued to permit the free radically polymerized segments to recombine with the terminator portion of the iniferter to form polymer segments. The second monomer charge is then introduced, which is polymerizable to the reinforcing thermoplastic polymer block, and the new mixture is exposed to the energy source to cause dissociation of the terminator radical and free radical polymerization of the second monomer charge onto the first polymer segment, that now being the initiater of the second free radical polymerization. Upon completion of polymerization of the second monomer charge, the energy source is terminated and the terminator portion of the iniferter recombines with the reinforcing thermoplastic polymer block to provide a block copolymer.

The particular energy source and its intensity are selected to result in dissociation of the iniferter to free radicals. When employing a photoiniferter which will dissociate upon exposure to ultraviolet light radiation, an ultraviolet light source is utilized. The intensity in rate of radiation is chosen so that it will advance the polymerization at a reasonable rate without deleteriously affecting the polymer segment being produced. An ultraviolet light source having a wave length on the order of 300 to 400 nm spaced approximately 10 cm from the reactants to provide an exposure of 2 milliwatts per square centimeter has been found to produce suitable results. Reaction times on the order of 2 to 50 hours have been found to be typical, depending upon the intensity of the radiation, with faster reaction times being observed at greater intensities.

The reactants and any solvent employed are charged into an energy source-transparent vessel and therein subjected to the energy source. If the energy source is ultraviolet light radiation, a suitable ultraviolet light-transparent vessel is utilized.

The reaction is preferably conducted in a vessel with agitation to permit uniform exposure of the reactants to the energy source. While most of the reactions have been conducted by employing a batch process, it is possible to utilize the same technology in a continuous polymerization operation.

The reaction mixture may include a suitable inert solvent but it is not necessary since some of the monomeric materials are liquid themselves and may thus be charged into the reaction vessel without utilization of a solvent.

The solvent, if utilized in the free radical polymerization, may be any substance which is liquid in a temperature range of about -10 °C to about 50 °C, is substantially transparent to the energy source employed to permit dissociation of the iniferter to form free radicals, is inert to the reactants and product, and will not otherwise adversely affect the reaction. Suitable solvents include water, alkyl acetates such as ethyl acetate, alkanes such as hexane or heptane, and alcohols such as methyl alcohol, ethanol, isopropyl alcohol, and mixtures of one or more of these. Other solvent systems are useful. The amount of solvent is generally about 30 to 80 percent by weight based on the total weight of the reactants and solvent. In addition to solution polymerization herein described, the copolymerization may be carried out by other well known techniques such as suspension, emulsion and bulk polymerization.

As previously mentioned, the copolymer may, when necessary or desirable, be blended with a compatible tackifying resin and/or plasticizer in order to optimize the ultimate tack and peel properties of the PSA composition. The use of such tack-modifiers is common in the art, as is described in the Handbook of Pressure-Sensitive Adhesive Technology edited by Donatas Satas (1982). Examples of useful tackifying resins include rosin, rosin derivatives, hydrogenated rosin derivatives, polyterpene resins, phenolic resins, coumarone-indene resins, and the like. A preferred tackifier is poly t-butyl styrene. Plasticizers which can be

employed include the well-known extender oils (aromatic, paraffinic, or naphthenic), as well as a wide variety of liquid polymers. When used, tackifying resin is preferably added in an amount not to exceed about 150 parts by weight per 100 parts by weight copolymer, and plasticizer may be added in an amount up to about 50 parts by weight per 100 parts by weight copolymer.

It is also within the scope of this invention to include various other components in the adhesive formulation. For example, it may be desirable to include such materials as pigments, fillers, stabilizers, medicaments, or various polymeric additives.

The adhesive copolymer compositions prepared in accordance with the present invention are easily coated upon suitable flexible or inflexible backing materials by conventional coating techniques to produce adhesive coated sheet materials in accord with the present invention. The flexible backing material may be any material conventionally utilized as a tape backing or any other flexible material. Typical examples of flexible backing materials employed as conventional tape backings which may be useful for the adhesive compositions of the present invention include those made of paper, plastic films such as polypropylene, polyethylene, polyvinyl chloride, polyester (e.g., polyethylene terephthalate), cellulose acetate and ethyl cellulose.

Backings which are highly moisture vapor transmissive will have an MVT of at least 1000 grams per square meter per 24 hours. Suitable backings for high moisture vapor transmission tapes are disclosed in U.S. Pat. No. 3,121,021. Such tapes are breathable and porous. The copolymer PSA compositions of the invention provide adequate adhesive properties without unduly impairing the overall MVT of the porous backing. Preferred breathable backings are not highly porous but in fact are polymeric materials having little, if any, porosity but instead act as a means of transporting water molecules from the surface of the skin without permitting the passage of bacterial or viral infection to find its way to the skin. A preferred example of such a backing is provided by a film of polyurethane such as that formed by extrusion of EstaneTM polyurethane. Other useful materials for backings are disclosed in U.S. Pat. Nos. 3,640,829, 3,770,537 and 3,870,590. Such breathable tapes promote healing as well as protect surgical incisions from contamination and harmful stress,

Backings may also be prepared of fabric such as woven fabric formed of threads of synthetic or natural materials such as cotton, nylon, rayon, glass, ceramic material, and the like or nonwoven fabric such as air laid webs of natural or synthetic fibers or blends of these. The backing may also be formed of metal, metalized polymeric films, or ceramic sheet materials. The coated sheet materials may take the form of any article conventionally known to be utilized with PSA compositions such as labels, tapes, signs, covers, marking indicia, and the like.

The PSA compositions of the present invention may be coated by any of a variety of conventional coating techniques such as roll coating, spray coating, curtain coating, and the like. The PSA compositions may also be coated by extrusion coating, coextrusion, and hot-melt coating devices for this purpose. Primers may be used but they are not always necessary.

It should be noted that, while the adhesives of the present invention are imparted improved shear strength without subsequent crosslinking, if necessary, further solvent resistance and resistance to photochemical or oxidative forces may be obtained by crosslinking by employing radiant energy or chemical procedures without upsetting the "fourfold" balance of adhesive properties.

I.C. <u>Accelerated Photoiniferter Polymerization of Vinyl-Siloxane Copolymers</u>

The metal compound accelerator can also be used according to the method of the present invention to accelerate the polymerization of vinyl-siloxane copolymers described in copending U.S. Application Serial No. 07/393,550, Kumar, et al., Siloxane Iniferter Compounds, Block Copolymers Made Therewith and a Method of Making The Block Copolymer incorporated by reference herein. The vinyl siloxane copolymers prepared according to the accelerated method can be used to prepare coated sheet materials therewith as in copending U.S. Application Serial No. 07/393,557, Kumar, et al., General Purpose Siloxane Release Coatings.

The method is similar to the general acceleration method described above wherein the iniferter of the general formula $I(T)_n$ is represented by the formula

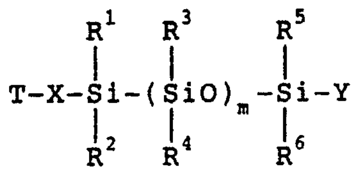

wherein

T and X are organic groups selected so that the T-X bond is capable of dissociating upon being subjected to an appropriate energy source to form a terminator free radical of the formula T• and an initiator free radical of the formula

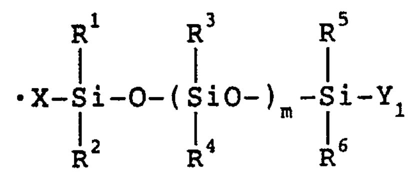

the initiator free radical being sufficiently reactive to initiate free radical polymerization of free radially polymerizable monomer and the terminator free radical being insufficiently capable of initiating free radical polymerization of free radically polymerizable monomer but capable of rejoining with the initiator free radical or a free radical polymer segment free radically polymerized with the initiator free radical; wherein

$R^1$, $R^2$, $R^5$ and $R^6$ are monovalent moieties selected from the group consisting of hydrogen, $C_{1-4}$ alkyl $C_{1-4}$ alkoxy and aryl which can be the same or are different;

$R^3$ and $R^4$ are monovalent moieties which can be the same or different selected from the group consisting of $C_{1-4}$ alkyl, $C_{1-4}$ fluoroalkyl including at least one fluorine atom and aryl;

$R^1$, $R^2$, $R^3$, $R^4$, $R^5$ and $R^6$ are selected so that they do not prevent the initiator free radical from initiating free radical polymerization or the combining of the terminator free radical with the initiator free radical or a polymer free radical segment including the initiator free radical;

Y is selected from the group consisting of -X-T and -Z wherein X and T are defined above and Z is an organic moiety that will not dissociate to form free radicals when subjected to the energy source;

$Y_1$ is selected from the group consisting of -X• and -Z;

m is an integer of 10 or greater;

the exposing the first mixture to an energy source forms free radicals T• and

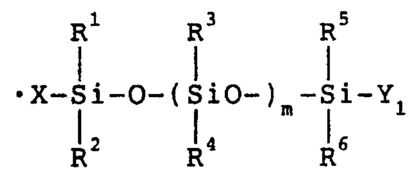 ;

the maintaining the exposure results in the polymerization of the initiator radical and the free radically polymerizable monomer of the first monomer charge to form a free radical block copolymer segment represented by the formula

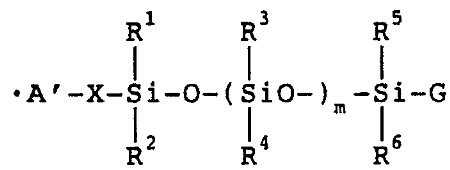

wherein A' represents a polymer block comprising polymerized free radically polymerizable monomer of the first monomer charge; and

G is selected from the group consisting of -Z and -X-A'•;

the terminating the exposure forms a block copolymer represented by the formula

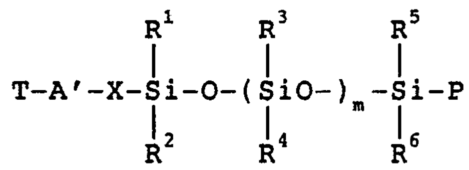

wherein P is selected from the group consisting of -X-A'-T and -Z, wherein X, A', T, and Z are defined above or alternatively maintaining the exposure of

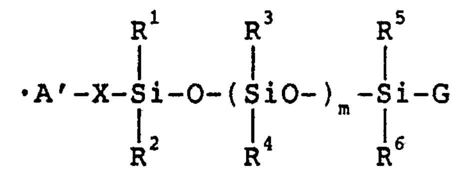

and T•;
the optionally mixing

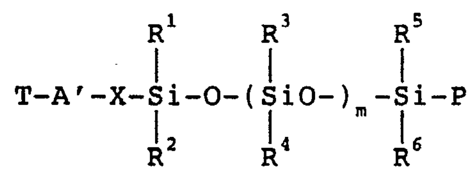

or the mixing nT• and

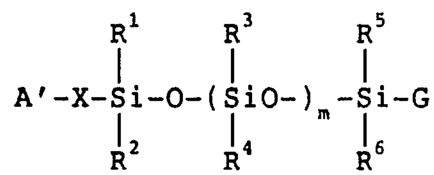

with the second monomer charge comprising free radically polymerizable monomer forms the second mixture;
the exposing the mixture of

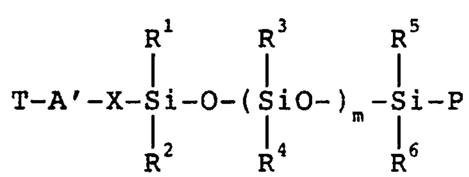

and the second monomer charge to an energy source capable of forming free radical T• and

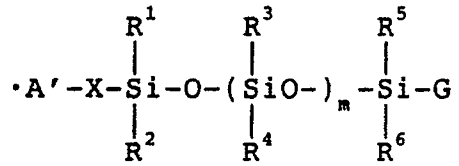
;

or alternatively maintaining the exposure of

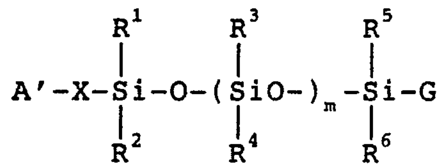

and nT•, which is mixed with the second monomer charge, to the energy source;

the maintaining the exposure results in the polymerization of the radically polymerizable monomer with the free radical

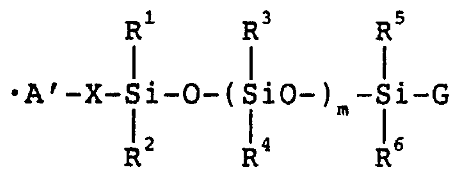

to form a free radical block copolymer segment represented by the formula

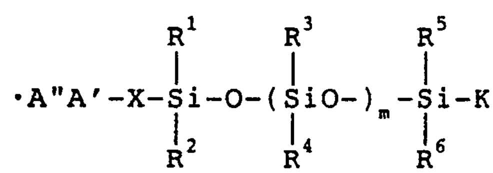

wherein A" represents a polymer block comprising polymerized free radically polymerizable second monomer;

and

K is selected from the group consisting of -X-A'-A"• and -Z; and

the terminating the exposure results in the combining of

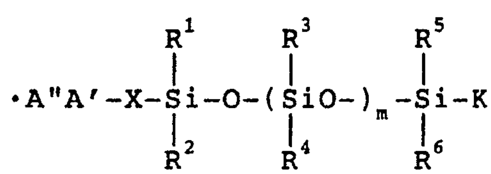

and T• to form a block copolymer represented by the formula

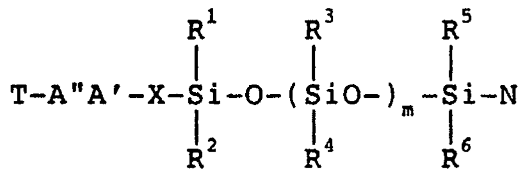

wherein N is selected from the group consisting of -X-A'A"T and -Z.

As indicated above, T and X are organic groups selected so that the T-X bond is capable of dissociating upon being subjected to an appropriate energy source to form free radicals.

Useful organic groups T include but are not limited to xanthates and dithiocarbamates. Examples of xanthates useful as the organic group T include xanthates of the formula:

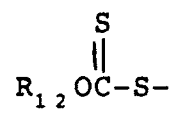

wherein $R_{12}$ is a monovalent moiety selected from the group consisting of hydrogen, $C_{1-4}$ alkyl, aryl and substituted aryl.
Preferably, the organic group T has the formula

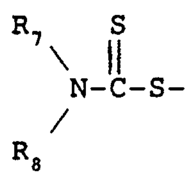

wherein $R_7$ and $R_8$ are monovalent moieties which can be the same or different selected from the group consisting of hydrogen, $C_{1-4}$ alkyl, $C_{1-4}$ fluoroalkyl including at least one fluorine atom, aryl and substituted aryl. $R_7$ and $R_8$ are selected so they will not prevent the initiator free radical from initiating free radical polymerization or the combining of the terminator free radical with the initiator free radical or a polymer free radical segment including the initiator free radical. Preferably $R_7$ and $R_8$ are ethyl radicals for reasons of commercial availability.

A primary function of the organic group X is its ability to provide an initiator free radical upon dissociation. A secondary function of the organic group X is to provide hydrolytic stability to the iniferter, since a T-Si bond would be easily hydrolyzed. Preferably, the organic group X is a divalent radical selected from the group consisting of alkylene, arylalkylene and arylene.

X can also preferably comprise a divalent species having the general formula

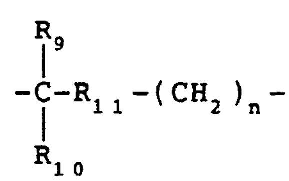

wherein
$R_9$ and $R_{10}$ can be the same or different and are selected from the group consisting of hydrogen and $C_{1-6}$ alkyl;
$R_{11}$ is a divalent radical selected from the group consisting of $C_{1-7}$ alkylene and phenylene; and
n is an integer of at least 1.

x can also preferably be selected from the group consisting of

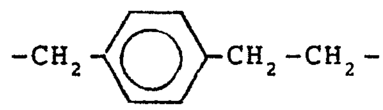 , 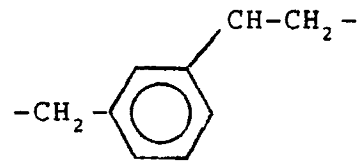 ,

and mixtures thereof.

Most preferably X is selected from the group consisting of

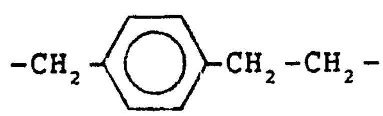 , 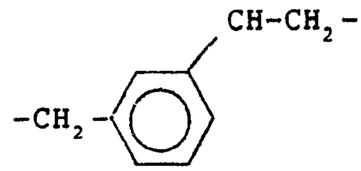 ,

and mixtures thereof for reasons of commercial availability and ease of synthesis of the siloxane iniferter compound.

As indicated above, Y is selected from the group consisting of -X-T and -Z wherein -X-T and -Z are as defined above. If Y is selected to be -X-T, a "macro" siloxane diiniferter is formed which can be used in the preparation of ABA, CABAC, etc. vinyl-siloxane block copolymers. If Y is selected to be -Z, a "macro" siloxane monoiniferter is formed which can be used in the preparation of AB, CAB, etc. vinyl siloxane block copolymers.

Z has been defined above as an organic moiety that will not dissociate to form free radicals when subjected to an energy source. Preferably, Z is selected from the group consisting of alkyl, alkoxy, alkylamino, aryl, hydroxyl, and fluoroalkyl.

As indicated above, m should be an integer of at least 10 in order that the block copolymer formed using the siloxane iniferter compound contains a siloxane segment of sufficient size to impart some of the properties of the siloxane segment to the block copolymer. It is possible for m to have a value less than 10. However, if m is less than 10, the siloxane segment would have a negligible effect on the properties of the block copolymer. Preferably, m is an integer ranging from about 20 to about 200 in order that the siloxane segment is of sufficient size to impart some of the properties of the siloxane segment to the block copolymer.

The weight ratio of vinyl polymer block to siloxane polymer block of the copolymer can vary. The preferred block copolymers are those wherein the weight ratio of vinyl polymer block to siloxane polymer block ranges from about 80:20 to 50:50, most preferably 70:30 to 60:40, in order that the copolymer possesses properties inherent to each of the different blocks.

The preferred block copolymers are those wherein the free radical polymerizable monomer is selected from the group consisting of styrene, methyl methacrylate, methyl acrylate, acrylic acid, vinyl acetate, acrylonitrile, isobornyl methacrylate, N-vinyl pyrrolidone, butyl methacrylate, isopropyl methacrylate, N-methyl perfluorooctane sulfonamido ethyl acrylate, N-ethyl perfluorooctane sulfonamido ethyl acrylate, hydroxy propyl acrylate, hydroxy ethyl acrylate, and mixtures thereof.

Most preferably, A comprises a copolymer which consists essentially of methyl acrylate and acrylic acid.

## Preparation of Siloxane Iniferter Compound

The siloxane iniferter compound is referred to as a "macro" iniferter due to the inclusion of the polymerized siloxane segment. The macro siloxane iniferter compound of the present invention can be prepared as follows.

## Synthesis of End Blocker

The first step in the preparation of the macro siloxane iniferter compound is the synthesis of the endblocker, which is used in the preparation of the polymerized siloxane segment. The synthesis of the endblocker can be represented by the following general formula:

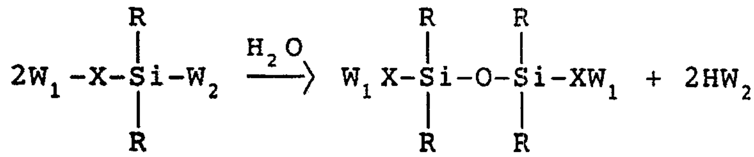

wherein
$W_1$ is selected from the group consisting of Cl, Br and tosylate,
$W_2$ is selected from the group consisting of Cl, Br and alkoxy,
R can be any combination of $R_1$, $R_2$, $R_5$ or $R_6$, as previously defined, and
X is as previously defined.

The above reaction can be carried out in any suitable corrosion resistant vessel such as glass or stainless steel. The above reaction is exothermic and is preferably carried out at room temperature.

The end blocker should be capable of controlling the molecular weight of the polymerized siloxane segment. In addition, the end blocker should be capable of reacting with a nucleophile such as sodium diethyldithiocarbamate in a suitable organic solvent under mild conditions to yield the siloxane iniferter compound of the present invention.

Polymerization of Siloxane Monomers to Form Siloxane Precursor

The second step in the preparation of the macro siloxane iniferter compound is the polymerization of an organocyclosiloxane monomer by use of the end blocker in order to form a "siloxane precursor" also referred to herein as a "polymerized siloxane segment". An example of a suitable organocylosiloxane monomer is hexamethylcyclotrisiloxane, "$D_3$". The selection of the endblocker is important since it caps one or both ends of the polymerized siloxane segment depending upon whether a difunctional or monofunctional iniferter compound is formed, respectively.

Preparation of Siloxane Precursor to Siloxane Monoiniferter Compound

The preparation of a siloxane precursor to the siloxane monoiniferter compound useful in forming AB, CAB, etc. block copolymers is accomplished by anionic polymerization of cyclic siloxanes having strained ring structure.

Suitable monomers for use in the above-mentioned anionic polymerization are, in general, diorganocyclosiloxanes of the formula

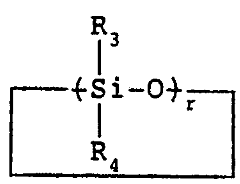

wherein $R_3$ and $R_4$ are as previously defined and wherein r is an integer of 3. The preferred monomer is the cylic siloxane wherein r is an integer of 3 and $R_3$ and $R_4$ are both methyl groups, designated as hexamethylcyclotrisiloxane, "$D_3$".

Initiators of the anionic polymerization reaction are chosen such that redistribution reactions are much slower than chain growth, thus monofunctional living polymer is produced. Suitable initiators include but are not limited to alkyl or aryl lithium compounds containing up to 20 carbon atoms in the alkyl or aryl radical or more, preferably up to 8 carbon atoms. Examples of such compounds include methyl lithium, ethyl lithium, n-butyl lithium, sec-butyl lithium, tert-butyl lithium, phenyl lithium, and 2-ethylhexyl lithium. Examples of additional useful initiators include but are not limited to lithium alkoxides, hydroxides, and amides, as well as triorganosilanolates of the formula

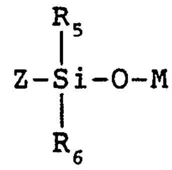

wherein

M is a lithium or benzyltrimethylammonium bis(o-phenylenedioxy) -phenyl cation, the latter cation requiring a coactivator such as water or alcohol, and

Z, $R_5$, and $R_6$ are as previously defined.

The above compounds are described by C.L. Lee and O.K. Johannson, J. Polym. Sci., Polym. Chem., 14, 729 (1976).

The preferred triorganosilanolate initiator is lithium trimethylsilanolate (LTMS) or butyldimethylsilanolate. Preferably, the reaction components comprise both strained cyclic monomer and lithium initiator, thus reducing the likelihood of redistribution reactions and thereby providing siloxane precursor having a narrow molecular weight distribution which is reasonably free of unwanted cyclic oligomers and nonfunctional or difunctional polymers.

For the initiation of the anionic polymerization, an inert, preferably polar, organic solvent can be utilized. Anionic polymerization propagation with a lithium counterion requires either a strong polar solvent such as tetrahydrofuran (THF), dimethyl sulfoxide, or hexamethyl-phosphorous triamide, or a mixture of such a strong polar solvent with a nonpolar aliphatic, cycloaliphatic, or aromatic hydrocarbon solvent such as hexane, heptane, octane, cyclohexane, or toluene. The polar solvent allows the initiator to dissociate and become "activated", thus making propagation possible. If a nonpolar solvent is utilized the initator such as lithium trimethylsilanolate will not dissociate and hence will not become "activated".

Generally, the polymerization can be carried out at a temperature ranging from about -20°C to about 100°C, preferably from about -10°C to about 50°C. Anhydrous conditions and an inert atmosphere such as nitrogen, helium, or argon are required. Termination of the anionic polymerization is, in general, achieved via direct reaction of the living polymeric anion with halogen-containing terminating agents, i.e., functionalized halosilanes of the formula

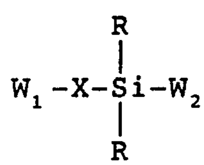

wherein $W_1$, $W_2$, and R are as previously defined.

Preparation of Siloxane Precursor to Siloxane Diiniferter Compound

The preparation of the novel siloxane precursor compound for use in preparation of the novel siloxane diiniferter compound of the present invention involves an acid or base catalyzed equilibration reaction of diorganocyclosiloxanes having the general formula

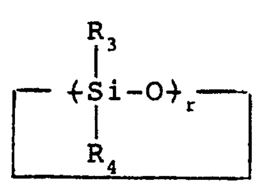,

wherein $R_3$, $R_4$, and r are as previously defined, with an end blocker having the general formula

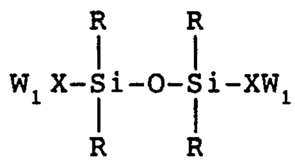

wherein $W_1$, X, and R are as previously defined.

Octamethyl cyclotetrasiloxane, "$D_4$", is especially preferred for the acid or base equilibration reaction due to its commercial availability. Examples of proton acids useful as catalysts include sulfuric acid, ethane sulfonic acid, trifluoromethane sulfonic acid, selenic acid, nitric acid, phosphoric acids, pyrophosphoric acid, and boric acid. An example of a useful carboxylic acid catalyst is trifluoroacetic acid. Lewis acid catalysts useful for polymerization are iron (III) chloride, boron trifluoride, zinc chloride, tin (IV) chloride, etc. Bases useful as catalysts include alkali-metal hydroxides, alkali-metal silanolates, alkali-metal alkoxides, quaternary ammonium hydroxides, tetramethylammonium silanolate, tetrabutylphosphonium silanolate, etc.

Generally, the polymerization can be carried out at a temperature ranging from about 25° C to about 150° C, preferably from about 75° C to about 90° C.

The selection of an endblocker which will cooperate with the siloxane midblock segment to accomplish the desired overall performance of the block copolymer is important and must be made in a way which will not diminish the effectiveness of the siloxane segment. The end blocks of the siloxane moiety should be able to react with soft nucleophiles such as sodium diethyldithiocarbamate.

<u>Placement of the Photoiniferter on the Siloxane Precursor</u>

The third step involved in the preparation of the "macro" siloxane iniferter compound is the placement of a photoiniferter on the siloxane precursor, also referred to herein as the "polymerized siloxane segment". The following general reaction demonstrates the placement of the photoiniferter on the polymerized siloxane segment.

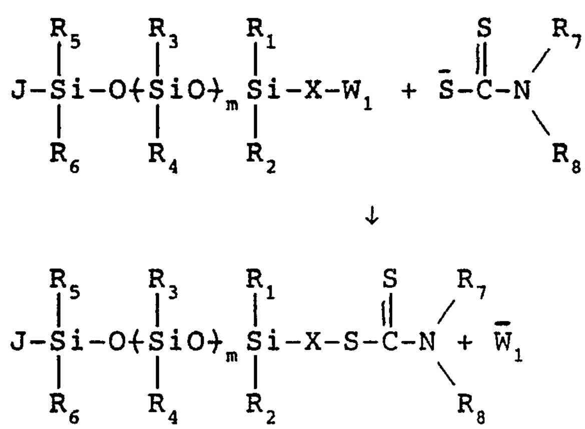

wherein $R_1$, $R_2$, $R_3$, $R_4$, $R_5$, $R_6$, $R_7$, $R_8$, $W_1$, and x are as previously defined and J is selected from the group consisting of -Z and -X-$W_1$.

The incorporation of a photoiniferter on the polymerized siloxane segment involves the reaction of a mono or difunctional siloxane segment with a nucleophile in the presence of a polar organic solvent. Mono or difunctional siloxane segments can be represented by the general formula

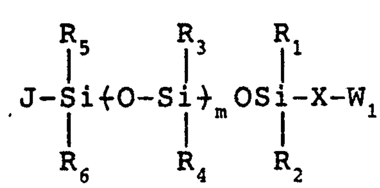

wherein $W_1$, X, $R_1$, $R_2$, $R_3$, $R_4$, $R_5$, $R_6$, J and m are as previously defined.

Preferably, $R_1$, $R_2$, $R_3$, $R_4$, $R_5$, and $R_6$ are methyl groups and $W_1$ is a chloro group for reasons of commercial availability.

Useful nucleophiles include, but are not limited to, dithiocarbamates of the general formula

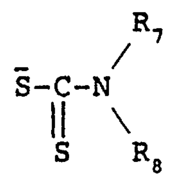

wherein $R_7$, and $R_8$ are as previously defined. Preferably, $R_7$, and $R_8$ are ethyl groups for reasons of commercial availability.

The reaction involving the incorporation of a photoiniferter on the polymerized siloxane segment requires a polar organic solvent such as tetrahydrofuran, chloroform, dimethylsulfoxide or dimethylformamide. The polar solvent is utilized to dissolve the reaction components in order for the reaction to proceed.

Generally, the reaction is carried out at a temperature ranging from about 20°C to about 45°C, preferably from about 20°C to about 30°C.

The present invention also relates to a coated sheet material similar to that described in U.S. Application Serial No. 07/393,550, comprising a flexible sheet material and a release coating prepared according to the accelerated method described above covering at least a portion of one major surface thereof wherein the release coating comprises a block copolymer having a formula selected from the group consisting of AB and ABA;
wherein A comprises at least one vinyl polymeric block;
wherein each polymeric block comprises polymerized free radically polymerizable monomer, wherein each polymeric block has a $T_g$ or $T_m$ above about -20°C and wherein A comprises at least about 40 weight percent of the block copolymer;
wherein B is a siloxane polymeric block having a number average molecular weight above about 1000;
and wherein the weight percent of said siloxane polymeric block is enough to provide said block copolymer with a surface release value not greater than about 50 Newtons/dm; and
wherein the block copolymer has the formula

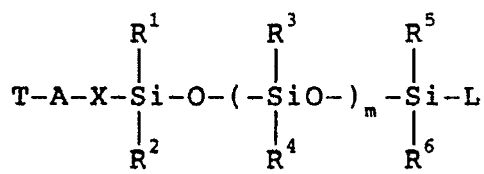

wherein T, A, X, L, $R_1$, $R_2$, $R_3$, $R_4$, $R_5$ and $R_6$ are as previously defined.

The siloxane polymeric block B must have a number average molecular weight above about 1000 in order for the release coating to function properly. Preferably, the siloxane polymeric block has a number average molecular weight of about 1,000 to about 20,000. Most preferably, the siloxane polymeric block has a number average molecular weight ranging from about 2,000 to about 15,000. The composition of the block copolymer is such as to provide the block copolymer with a surface release value not greater than about 50 N/dm.

As indicated above, m should be an integer of at least 10 in order that the block copolymer formed using the siloxane iniferter compound contains a siloxane segment of sufficient size to impart some of the properties of the siloxane segment to the block copolymer. Preferably, however, m is an integer ranging from about 10 to about 200 in order to provide a block copolymer having release characteristics with a broad range of capabilities.

The block copolymers comprising the release coatings are typically AB and ABA type copolymers, but they can also have CAB, CABAC, etc. architectures.

The preferred weight ratio of vinyl polymer block to siloxane polymer block in the copolymer ranges from about 98:2 to 40:60, in order to allow for a wide range of release performance while still maintaining good film forming properties.

The requirement that the $T_g$ or $T_m$ of the vinyl polymeric block or blocks A be above about -20° C is to insure that the coating is non-tacky.

The preferred copolymers are those wherein A comprises at least one polymer block comprising polymerized free radically polymerizable monomer selected from the group consisting of styrene, methyl methacrylate, methyl acrylate, acrylic acid, acrylonitrile, isobornyl methacrylate, N-vinyl pyrrolidone, butyl methacrylate, isopropyl methacrylate, isobornyl acrylate, vinyl acetate, hydroxy propyl acrylate, hydroxy ethyl acrylate, N-methyl perfluorooctane sulfonamido ethyl acrylate, N-ethyl perfluorooctane sulfonamido ethyl acrylate and mixtures thereof.

Most preferably, A comprises a copolymer block consisting essentially of methyl acrylate and acrylic acid.

A, which is defined above, can comprise at least one homopolymer block, copolymer block or multiblock copolymer. Preferably, A comprises at least one copolymer block for reasons of imparting better adhesion, water dispersability, and ink receptivity. A can also comprise a multiblock copolymer wherein at least one block of said multiblock copolymer is a homopolymer.

Fillers or pigments (e.g, alumina, silica, titania, or calcium carbonate) may, of course, be added to the copolymer compositions to reduce gloss and also impart a surface texture that is more receptive to marking with pencils and roller ball pens.

The block copolymers useful as release coating of the present invention may, when necessary or desirable, be blended with a compatible modifier in order to optimize physical properties. The use of such modifiers is common in the art. For example, it may be desirable to include such materials as pigments, fillers, stabilizers, or various polymeric additives.

It should be noted that, while the block copolymers of the present invention have improved toughness without subsequent cross-linking, if necessary, further solvent resistance and resistance to photochemical or oxidative forces may be obtained by cross-linking by employing radiant energy or chemical procedures.

The release copolymers defined above are best used as a coating for a solid substrate, which may be a sheet, fiber, or shaped object. However, the preferred substrates are flexible substrates such as those used for pressure-sensitive adhesive products. Suitable substrates include paper, coated paper such as a polymeric coated or saturated paper (e.g. polyethylene coated kraft paper), metal sheets and foils, non-woven fabrics, and films of thermoplastic resins such as polyesters, polyamides, polyolefins, polycarbonates, polyvinyl chloride, etc., although any surface requiring release toward adhesives can be used. Primers known in the art can be utilized to aid in adhesion of the coating to the substrate, but they are not generally necessary.

The release coating compositions may be applied to suitable substrates by means of conventional coating techniques such as wire-wound rod, direct gravure, offset gravure, reverse roll, air-knife, and trailing blade coating; hot melt coating is also possible. The resultant coatings provide effective release for a wide variety of conventional pressure-sensitive adhesives such as natural rubber-based, acrylic, and other synthetic film-forming elastomeric materials.

The release coatings and LABs of the coated sheet materials are typically applied at about 0.2 to about 2.0 $g/m^2$ depending upon the nature of the flexible substrate and the intended application of the coated sheet material.

## Examples

The following detailed description includes exemplary accelerated preparations of acrylic copolymers useful as pressure sensitive adhesives, acrylic copolymers useful as toughened thermoplastics, and vinyl-siloxane copolymers. All parts and percentages are by weight unless otherwise specified.

## Definitions of Terms

The number-average molecular weight ($\overline{M}_n$) and weight-average molecular weight ($\overline{M}_n$), are well known mathematical descriptions of the molecular weight distribution of a polymer sample.

Each of the foregoing is a well known term used by polymer chemists and others. Further explanation of the derivation of these terms may be found in Experimental Methods in Polymer Chemistry, Wiley and Sons, 1981, Chapter 3 entitled "Molecular Weight Averages", pages 57-61.

The block copolymers prepared according to the accelerated method of the present invention are described in a short-hand way depending upon the monomer forming each block. For example, MMA-b-BA-b-MMA refers to a copolymer having blocks ("b") of polymerized methyl methacrylate ("MMA") and a block of butyl acrylate ("BA"). For example, MMA-b-BA-b-MMA refers to an ABA block copolymer having two A

(polymethyl methacrylate) blocks and a single B midblock (butyl acrylate).

Abbreviations

| | |
|---|---|
| BA | = Butyl acrylate; |
| MMA | = Methyl methacrylate; |
| IOA | = Isooctyl acrylate; |
| AA | = Acrylic acid; |
| NVP | N-vinyl-2-pyrrolidone; |
| XDC | = Xylylene bis(N,N-diethyl dithiocarbamate); |
| $Sn(Oct)_2$ | = Stannous 2-ethylhexanoate; and |
| $Zn(Oct)_2$ | = Zinc 2-ethylexanoate. |

Test Methods

The test methods used to evaluate the block copolymers of the examples are industry standard tests. The test methods which characterize the polymers prepared according to the accelerated method of the invention are those which demonstrate its molecular architecture. The gel permeation chromatography (GPC), inherent viscosity (I.V.) modulus, percent elongation, and tensile strength measurement results have been obtained. The standard tests are described in detail in various publications of the American Society for Testing and Materials (ASTM), Philadelphia, Pa. The standard test methods are described in detail below. The reference source of each of the standard test methods is also given.

Gel Permeation Chromatography

The characterization of the molecular weight distribution of the polymers has been by conventional gel permeation chromatography (GPC). A Hewlett-Packard Model 10848, high performance liquid chromatograph equipped with StyragelTM columns was used. The system was calibrated using polystyrene standards. All molecular weight averages are polystyrene equivalent molecular weights. The molecular weight averages and polydispersities were calculated according to accepted practices. GPC test methods are further explained in "Modern Size Exclusion Liquid Chromatography" Practice of Gel Permeation Chromatography, John Wiley and Sons, 1979.

Modulus - Elongation - Tensile Measurements

The mechanical properties of the films formed from the MMA-BA-MMA copolymer formed according to the method of this invention were measured according to the procedures established by the American Standard Test Methods (ASTM) which can be found under the designations: D-412-83, "Rubber Properties in Tension" and D 638M-84, "Tensile Properties of Plastics".

Preparation of films for test purposes occurred as follows. Films were cast from solution upon a substrate which permitted subjecting the film to 16 hours of drying in a vacuum oven at 50 °C. The film thus formed was cut to standard dumbbell shapes in order to provide test samples for insertion into the jaws of an InstronTM tensile test instrument available from Instron Company (Model #1122) where they were tested under ambient conditions in a testing room controlled at 23 °C and a humidity of 50%.

The prescribed dumbbell-shaped specimens were stretched at a constant rate to the breaking point. The tensile strength at break was recorded. The elongation was expressed as a percentage of the original length. The modulus (stiffness) and tensile strength were calculated based on the following formulae where "force" is expressed in Newtons (N), linear dimensions in meters and the modulus and tensile units are expressed as mega pascals (MPa).

$$\text{Tensile} = \frac{\text{Force}}{\text{Width x Thickness}}$$

$$\text{Modulus} = \frac{\text{Force x Initial Length}}{\text{Width x Thickness x Final Length}}$$

$$\text{\% Elongation at break} = \frac{\text{Final length-original length}}{\text{original length}} \text{ x 100}$$

Example 1

Control Experiment Involving the Polymerization of BA with Photoiniferter Compound XDC in the Absence of both Stannous 2-ethylhexanoate and Zinc 2-ethylhexanoate

A cylindrical reaction bottle was charged with 30 ml butyl acrylate (BA) monomer, 0.15 grams of xylylene bis(N,N-diethyl dithiocarbamate) (XDC) photoiniferter and 50 ml toluene solvent. The cylindrical reaction bottle was purged with nitrogen for 10 minutes before sealing and placing the sealed bottle in a roller mechanism. The rotating sealed bottle was exposed for 3 hours to ultraviolet radiation from six General Electric 15 watt cylindrical black light lamps. The reaction bottle was unsealed and $^1H$ NMR spectroscopy was utilized to determine the percentage conversion of a small removed sample. The reaction bottle was again purged with nitrogen, resealed, and further subjected to ultraviolet radiation until a total exposure time of approximately 24 hours had elapsed. $^1H$ NMR spectroscopy was again utilized to determine the percentage conversion of a small removed sample. The $^1H$ NMR results for Example 1 are set forth in Table I below.

Example 2

Polymerization of BA with XDC in Presence of Stannous 2-ethylhexanoate

The procedure of Example 1 was followed. The amount of components utilized were as follows: 30 ml of butyl acrylate monomer, 0.15 grams of xylylene bis(N,N-diethyl dithiocarbamate) (XDC) photoiniferter, 50 ml of toluene solvent. In addition, 1.54 grams of stannous 2-ethylhexanoate (metal compound accelerator) were charged into the reaction bottle before exposure to the ultraviolet radiation. Percentage conversion was determined by $^1H$ NMR spectroscopy. The NMR results for Example 2 are reported in Table I below.

Example 3

Polymerization of BA with XDC in Presence of Zinc 2-ethylhexanoate

The procedure of Example 2 was followed. The amount of components utilized were as follows: 30 ml of butyl acrylate monomer, 0.15 grams of (XDC) photoiniferter, 50 ml (43.3 grams) of toluene solvent, and 5.8 grams of zinc 2-ethylhexanoate (metal compound accelerator). The $^1H$ NMR spectroscopy results for Example 3 are reported in Table I below.

TABLE I

| Example | Monomer BA | Difunctional Photoiniferter Compound XDC | Metal Compound Accelerator $Sn(Oct)_2$ | Metal Compound Accelerator $Zn(Oct)_2$ | Solvent Toluene | Exposure Time (hours) | Percentage Conversion (%)* |
|---|---|---|---|---|---|---|---|
| 1 | 30 ml | 0.15 g | 00 | 00 | 50 ml | 3 h | 28 |
| | 30 ml | 0.15 g | 00 | 00 | 50 ml | ~24 h | 100 |
| 2 | 30 ml | 0.15 g | 1.54 g | 00 | 50 ml | 3 h | 87 |
| | 30 ml | 0.15 g | 1.54 g | | 50 ml | 4 h | 100 |
| 3 | 30 | 0.15 g | 00 | 5.9 g (22% solid) | 50 ml | 3 h | 44 |

* percentage conversion was determined by NMR.

The data contained in Table I above demonstrates that the rate of photopolymerization reactions are much faster in the presence of metal compound accelerators than photopolymerization reactions in the absence of metal compound accelerators.

Examples 4 and 5 describe the preparation of toughened thermoplastics.

Example 4

Control Experiment Involving the Synthesis of Triblock Polymer MMA-BA-MMA in the Absence of Stannous 2-ethylhexanoate

A cylindrical reaction bottle was charged with 113.3 grams of BA monomer, 0.75 grams of XDC photoiniferter and 113.3 grams of EtoAC solvent. The mixture was purged with nitrogen for 10 minutes before sealing and placing the sealed bottle in a roller mechanism. The rotating, sealed bottle was exposed to ultraviolet radiation from six General Electric 15 watt black light lamps 47 hours. At this point, the ultraviolet source was turned off. A percent solid calculation revealed greater than 98% reaction.

Into a second cylindrical reaction bottle of 120 ml was charged 20 grams of the above poly BA-XDC, 23.7 grams of methyl methacrylate monomer and 38.6 grams of ethyl acetate solvent. The reaction bottle was then purged for 10 minutes with nitrogen. The reaction bottle was then sealed and placed in the roller mechanism for futher exposure to ultraviolet radiation which continued for 66 hours. The resulting triblock copolymer solution was removed. The composition of the resultant polymer was determined by $^1$H NMR spectroscopic analysis. A thin film of the triblock copolymer solution was cast and dried and then subjected to mechanical tests. The results of these tests are reported in Table II, Example 4.

Example 5

Synthesis of Triblock Polymer MMA-BA-MMA in the Presence of Stannous 2-ethylhexanoate

A cylindrical reaction bottle was charged with 7.05 g of dry polybutyl acrylate prepared according to the method of Example 4, 28.2 grams of methyl methacrylate monomer, 35.2 grams of toluene solvent and 14 grams of stannous 2-ethylhexanoate (metal compound accelerator). Purging for 10 minutes with nitrogen followed before the reaction bottle was sealed and placed in the roller mechanism. The rotating, sealed bottle was exposed to ultraviolet radiation from six General Electric 15 watt black light lamps for 6.6 hours. The resulting triblock copolymer solution was removed. The composition of the resultant polymer was determined by $^1$H NMR spectroscopic analysis. A thin film of the polymer was cast and dried and then subjected to mechanical tests. The results of these tests are reported in Table II, Example 5.

TABLE II

| Example | Composition | Exposure Time | Tensile Strength (MPa) | Modulus (MPa) | Elongation % |
|---|---|---|---|---|---|
| 4 | MMA-BA-MMA 36-28-36 made in absence of stannous 2-ethylhexanoate | 66 h | 20.65 | 452.018 | 10 |
| 5 | MMA-BA-MMA 40-20-40 made in presence of stannous 2-ethylhexanoate | 6.6 h | 22.9974 | 410.298 | 17 |

The data contained in Table II above demonstrates that copolymer of MMA-BA-MMA was prepared about 10 times faster in the presence of $Sn(Oct)_2$ than in absence of $Sn(Oct)_2$ with very similar mechanical properties observed.

Examples 6-10

An additional series of experiments were performed to attempt the polymerization of BA, without the use of an accelerator, with the use of stannous 2-ethylhexanoate as an accelerator, with the use of zinc 2-ethylhexanoate as an accelerator, with the use of both stannous 2-ethylhexanoate and zinc 2-ethylhexanoate

as accelerators, without the use of initiator XDC (control experiment), etc. The results of the experiments are reported in Table III below. It was observed that the reaction rate was greater when the combination of accelerators stannous 2-ethylhexanoate and zinc 2-ethylhexanoate were used rather than the use of either accelerator stannous 2-ethylhexanoate or zinc 2-ethylhexanoate separately.

Example 6

Control Experiment Involving the Polymerization of BA with XDC in the Absence of both Stannous 2-ethylhexanoate and Zinc 2-ethylhexanoate

A 120 ml volume cylindrical reaction bottle was charged with 26.6 grams of BA monomer, 0.15 grams of XDC photoiniferter and 43 grams of toluene solvent. The mixture was purged with nitrogen for 10 minutes before sealing and placing the sealed bottle in a roller mechanism. The rotating, sealed bottle was exposed to ultraviolet radiation from six General Electric 15 watt black light lamps. The reaction was monitored from 10 minutes up to 24 hours. The percent conversion was determined by $^1H$ NMR spectroscopy. The results are reported in Table III, Example 6. The percentage reaction versus time for Example 6 is plotted as line A in Figure 1.

Example 7

Polymerization of BA with XDC in Presence of Stannous 2-ethylhexanoate

A 120 ml volume cylindrical reaction bottle was charged with 26.6 grams of BA monomer, 0.15 grams of XDC photoiniferter, 43 grams of toluene solvent and 1.55 grams of stannous 2-ethylhexanoate accelerator metal compound. The mixture was purged with nitrogen for 10 minutes before sealing and placing the sealed bottle in a roller mechanism. The rotating, sealed bottle was exposed to ultraviolet radiation from six General Electric 15 watt black light lamps. The reaction was monitored from 10 minutes up to the completion of the reaction. The percent conversion was determined by $^1H$ NMR spectroscopy. The results are reported in Table III, Example 7. The percentage reaction versus time for Example 7 is plotted as line B in Figure 1.

Example 8

Polymerization of BA with XDC in Presence of a Mixture of Stannous 2-ethylhexanoate and Zinc 2-ethylhexanoate

A 120 ml volume cylindrical reaction bottle was charged with 26.6 grams of BA monomer, 0.15 grams of XDC photoiniferter, 43 grams of toluene solvent and 0.77 grams of stannous 2-ethylhexanoate (accelerator metal compound)and 0.15 gram (22% solid) of zinc 2-ethylhexanoate (accelerator metal compound). The mixture was purged with nitrogen for 10 minutes before sealing and placing the sealed bottle in a roller mechamism. The rotating, sealed bottle was exposed to ultraviolet radiation from six General Electric 15 watt black light lamps. The reaction was monitored from 10 minutes up to the completion of the reaction. The percent conversion was determined by $^1H$ NMR spectroscopy. The results are reported in Table III, Example 8. The percentage reaction versus time for Example 8 is plated as line C in Figure 1.

Figure 1 contains a plot of percent conversion versus time for Examples 6, 7 and 8 designated as lines A, B, and C, respectively. Figure 1 demonstrates that when photoiniferter reactions were performed in the presence and in the absence of metal accelerators, dramatically different slopes of the straight line plots were obtained. In the presence of $Sn(Oct)_2$ (line B) the photoiniferter reaction rate was increased significantly. Even greater rate acceleration was observed when mixtures of $Sn(Oct)_2$ and $Zn(Oct)_2$ were used (line C).

Example 9

Control Experiment to Determine whether Stannous 2-ethylhexanoate can Initiate Polymerization of BA Monomer in the Absence of a Photoiniferter

A 120 ml volume cylindrical reaction bottle was charged with 26.6 grams of BA monomer, 1.56 grams

of stannous 2-ethylhexanoate (accelerator metal compound) and 42.8 grams of toluene solvent. The mixture was purged with nitrogen for 10 minutes before sealing and placing the sealed bottle in a roller mechamism. The rotating, sealed bottle was exposed to ultraviolet radiation from six General Electric 15 watt black light lamps. The reaction was monitored from 10 minutes up to 3.7 hours of irradiation. The percent conversion was determined by $^1H$ NMR spectroscopy. The results are reported in Table III, Example 9.

Example 10

Control Experiment to Determine whether Zinc 2-ethylhexanoate can Initiate Polymerization of BA Monomer in the Absence of a Photoiniferter

A 120 ml volume cylindrical reaction bottle was charged with 26.6 grams of BA monomer, 5.9 (22% solid) grams of zinc 2-ethylhexanoate (accelerator metal compound) and 43 grams of toluene solvent. The mixture was purged with nitrogen for 10 minutes before sealing and placing the sealed bottle in a roller mechamism. The rotating, sealed bottle was exposed to ultraviolet radiation from six General Electric 15 watt black light lamps. The reaction was monitored from 10 minutes up to 3.7 hours of irradiation. The percent conversion was determined by $^1H$ NMR spectroscopy. The results are reported in Table III, Example 10.

TABLE III

| Exposure Time | Example 6 % Yield | Example 7 % Yield | Example 8 % Yield | Example 9 % Yield | Example 10 % Yield |
|---|---|---|---|---|---|
| 10 min | 9.2 | 41.5 | 49.8 | No Rxn. | No Rxn. |
| 20 min | 13 | 58.2 | 65.2 | No Rxn. | No Rxn. |
| 30 min | 19.9 | 68.3 | 76.5 | No Rxn. | No Rxn. |
| 1 hr | 33 | 79.7 | 87.8 | No Rxn. | No Rxn. |
| 3.7 hr | 66.8 | 92.5 | 100 | <5% | No Rxn. |
| ~24 hr | 100 | --- | --- | | |

Example 6 BA + XDC + Toluene (line A, Fig 1)
26.6g + 0.15g + 43 g

Example 7 BA + XDC + $Sn(Oct)_2$ + Toluene (line B, Fig 1)
26.6g + 0.15g + 1.55g + 43g

Example 8 BA + XDC + $Zn(Oct)_2$ + $Sn(Oct)_2$ + Toluene
26.6g + 0.15g + 3.0g 22% solid + 0.77g + 43g
(line C, Fig 1)

Example 9 BA + $Sn(Oct)_2$ + Toluene
26.19g + 1.56g + 42.8g

Example 10 BA + $Zn(Oct)_2$ + Toluene
26.6g + 5.9g 22% solid + 43g

Example 11

Polymerization of MMA with XDC

A 120 ml volume cylindrical reaction bottle was charged with 50 ml of MMA monomer and 0.3 grams of XDC photoiniferter. The mixture was purged with nitrogen for 10 minutes before sealing and placing the sealed bottle in a roller mechamism. The rotating, sealed bottle was exposed to ultraviolet radiation for 1 hour and 15 minutes from six General Electric 15 watt black light lamps. Analysis using $^1H$ NMR spectroscopy revealed 22.7% conversion.

Example 12

Polymerization of MMA with XDC in Presence of Stannous 2-ethylhexanoate

A 120 ml volume cylindrical reaction bottle was charged with 50 ml of MMA monomer, 0.3 grams XDC photoiniferter, 3.0 grams of stannous 2-ethylhexanoate (accelerator metal compound). The mixture was purged with nitrogen for 10 minutes before sealing and placing the sealed bottle in a roller mechamism. The rotating, sealed bottle was exposed to ultraviolet radiation for 1 hour and 15 minutes from six General Electric 15 watt black light lamps. Analysis using $^1H$ NMR spectroscopy revealed 42% conversion.

Examples 11 and 12 demonstrate a greater rate of MMA polymerization in the presence of $Sn(Oct)_2$ compared to MMA polymerization in absence of $Sn(Oct)_2$.

Example 13

Polymerization of NVP with XDC

A 120 ml volume cylindrical reaction bottle was charged with 28.25 grams of NVP monomer and 0.188 grams of XDC photoiniferter. The mixture was purged with nitrogen for 10 minutes before sealing and placing the sealed bottle in a roller mechanism. The rotating, sealed bottle was exposed to ultraviolet radiation for 1 hour and 15 minutes from six General Electric 15 watt black light lamps. A percent solid calculation revealed that 17.7% reaction of NVP occurred.

Example 14

Polymerization of NVP with XDC in Presence of Stannous 2-ethylhexanoate

A 120 ml volume cylindrical reaction bottle was charged with 28.25 grams of NVP monomer, 0.188 grams of XDC photoiniferter and 2.07 grams of stannous 2-ethylhexanoate (accelerator metal compound). The mixture was purged with nitrogen for 10 minutes before sealing and placing the sealed bottle in a roller mechamism. The rotating, sealed bottle was exposed to ultraviolet radiation for 1 hour and 15 minutes from six General Electric 15 watt black light lamps. 48.7% conversion of polymerization reaction of NVP occurred which was determined by a percent solid analysis.

Examples 13 and 14 demonstrate a large rate enhancement of the photopolymerization of NVP monomer in the presence of accelerator compound compared to a photopolymerization reaction in the absence of accelerator compound. Examples 15 and 16 describe the preparation of pressure-sensitive adhesives.

Example 15

Polymerization of IOA/AA with Photoiniferter Compound XDC

A cylindrical 16 oz. reaction bottle was charged with 98 grams of IOA monomer, 2 grams of AA monomer, 1.02 grams of XDC photoiniferter and 200 grams of EtoAc solvent. The mixture was purged with nitrogen for 10 minutes. The bottle was sealed and placed in a roller mechamism. The rotating, sealed bottle was exposed to ultraviolet radiation from six General Electric 15 watt black light lamps for 48 hours. A conversion of greater than 97% was obtained.

Example 16

Polymerization of P-(IOA/AA) with MMA in Presence of Stannous 2-ethylhexanoate

A 50 g portion of the polymer solution P-(IOA/AA) from Example 15 was charged into a 100 ml volume flask and the solvent was removed by rotary evaporation under vacuum. Into a small 4 ml volume vial 1.72 grams of P-(IOA/AA) polymer, 0.42 grams of MMA monomer and 0.11 grams of stannous 2-ethylhexanoate (accelerator metal compound) were charged and the vial was placed in a shaker for homogeneous mixing. The solution was coated on a polyester film. The film was placed under General Electric 15 watt black light lamps and irradiated for 10 minutes. The polymer coated film was conditioned for 24 hours in a constant temperature testing room at 22 °C and 50% relative humidity, after which a shear strength test was performed. A shear value of 311 minutes was obtained.

Example 17

Polymerization of P-(IOA/AA) with MMA

Following the procedure of Example 16, 1.20 grams of dry P-(IOA/AA) polymer prepared according to Example 15 and 0.30 grams of MMA monomer were charged into a 4 ml volume vial which was placed in a shaker for mixing for 15 minutes in order to form a homogeneous solution. The homogeneous solution was coated onto a polyester film. The film was exposed for 10 minutes to ultraviolet radiation from six General Electric 15 watt black light lamps. The polymer coated film was conditioned for 24 hours in a constant temperature testing room at 22 °C and 50% relative humidity, after which a shear strength test was performed. A shear value of less than one minute was obtained.

Examples 16 and 17 demonstrate that MMA incorporation into the midblock of a polymer prepared according to photoiniferter polymerization is much greater in the presence of accelerator compound as shown by the greater shear strength of the polymer prepared therewith.

Example 18

Kinetic Studies Performed Using Varying Concentrations of Stannous 2-ethylhexanoate Metal Compound Accelerator in the Polymerization of Butyl Acrylate

In order to gain insight into the enhanced polymerization rate obtained using metal compound accelerators, kinetic studies were performed using varying amounts of stannous 2-ethylhexanoate metal compound accelerator during the polymerization of BA by use of a photoinferter. The reaction components were charged into 8 separate 120 ml clear glass bottles which were purged with nitrogen for 10 minutes before sealing and placing the sealed bottle in a roller mechanism. Each rotating sealed bottle was exposed to ultraviolet radiation from six General Electric 15 watt black light lamps for 1 hour. The reaction components included 28 g of BA, 0.2 g XDC, 28g toluene and varying amounts of stannous 2-ethylhexanoate.

The reaction can be represented by the following equation :

$$\underset{28\ g}{BA} + \underset{0.2\ g}{XDC} + \underset{28\ g}{Toluene} + \underset{X}{\text{stannous 2-ethylhexanoate}} \xrightarrow{hv} P\text{-}BA$$

wherein X = mole % of stannous 2-ethylhexanoate. Percent solid calculations were used to determine the percent conversion, the results of which are shown in Figure 1. Figure 1 clearly demonstrates that samples containing higher levels of stannous 2-ethylhexanoate metal compound accelerator (shown in mole % of the monomer BA) polymerize more efficiently than the control sample which contained no stannous 2-ethylhexanoate. The most efficient polymerization occurred in the range of 2-3 mole % stannous 2-ethylhexanoate. Lower conversion values were observed for amounts much greater or much less than 2-3 mole% stannous 2-ethylhexanoate when irradiated for shorter times.

However, with longer irradiation times and conversions near completion (~85%) the reactivity difference between varying amounts of stannous 2-ethylhexanoate was small except for at very low levels of stannous 2-ethylhexanoate. The results of the experiment with respect to the long irradiation times are reported in Table IV below.

TABLE IV

| Mole % | Irradiation Time | % Conversion |
|---|---|---|
| 0.0 | 1 hour | 28 |
| 0.1 | 1 hour | 77 |
| 0.5 | 1 hour | 87 |
| 1.0 | 1 hour | 86 |
| 2.0 | 1 hour | 88 |
| 3.0 | 1 hour | 87 |
| 4.0 | 1 hour | 88 |
| 6.0 | 1 hour | 86 |
| 10.0 | 1 hour | 84 |

It was observed that the use of 0.5-1 mole % stannous 2-ethylhexanoate resulted in approximately the same percent conversion as the use of higher percentages of stannous 2-ethylhexanoate. Thus, the use of 0.5-1 mole % of stannous 2-ethylhexanoate would be more economical.

The low and high conversion kinetic studies suggest that the rate of acceleration of the photoiniferter reactions using stannous 2-ethylhexanoate is probably due to several factors. Although we do not wish to be limited to a particular mechamism, we believe that one of the roles of the accelerator stannous 2-ethylhexanoate may be that of oxygen scavenging. Oxygen is an inhibitor which combines with free radically polymerizable monomer thus hindering polymerization. This is the known role of stannous 2-ethylhexanoate in conventional photopolymerization reactions which is demonstrated by the lower induction time exhibited by such a reaction conducted with stannous 2-ethylhexanoate in Figure 2, line D of Example 19.

We believe that a second role of stannous 2-ethylhexanoate accelerator metal compound may be the complexing action of stannous 2-ethylhexanoate with the free radically polymerizable monomer. The higher percent conversion of butyl acrylate obtained with a higher percentage of stannous 2-ethylhexanoate (0.1 mole vs. 0.5 mole and above, Table IV) may indicate such a complexation mechanism.

We believe that a third role of stannous 2-ethylhexanoate metal compound accelerator may be the removal of the terminating radical

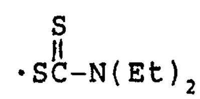

by stannous 2-ethylhexanoate. Stannous 2-ethylhexanoate may selectively remove the terminating radical

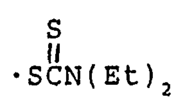

without reacting with the propagating polymer radical and thus enhance the polymerization reaction. This enhanced polymerization rate which occurs in the presence of stannous 2-ethylhexanoate is shown by the higher slope obtained when accelerator stannous 2-ethylhexanoate was used compared to a control reaction in which no stannous 2-ethylhexanoate was used. See Figure 1, lines B and A, respectively.

This higher rate suggests that the acceleration of the photoiniferter reaction by stannous 2-ethylhexanoate is due to more than oxygen scavenging. The effect of stannous 2-ethylhexanoate in conventional photopolymerization is principally reduction of oxygen inhibition as shown in Figure 2, line E.

Although I do not wish to be limited to any particular mechanism I theorize that the metal compound accelerator used to accelerate the free radical polymerization remains in its initial form intermixed within the polymer or copolymer system formed by the accelerated method. It is possible that a minor portion of the

metal compound accelerator may become incorporated into the polymer or copolymer produced thereby. It is also possible that a minor portion of the metal compound accelerator may become involved in side reactions involving $H_2O$, $O_2$, etc.

Example 19

Effect of Stannous 2-ethylhexanoate on the Polymerization of Butyl Acrylate Using a Conventional Initiator

The effect of stannous 2-ethylhexanoate on the polymerization of butyl acrylate with conventional initiator Irgacure 651 (2,2-dimethoxy-2-phenyl acetophenone), available from Ciba-Geigy according to the procedure of Example 6 was studied. The reaction components are listed below.

| Plot | BA + | Irgacure 651 + | Toluene + | Stannous 2-ethylhexanoate |
|---|---|---|---|---|
| D | 26.6 g | 0.1 g | 43 g | 1.6 g |
| E | 26.6 g | 0.1 g | 43 g | 0 |

The results are plotted as lines D and E in Figure 2. The data does not indicate any rate enhancement besides the decreased induction period in the presence of stannous 2-ethylhexanoate. The slope of each plot is the same which is indicative of the same reaction rate.

Example 20

Synthesis of Siloxane Iniferter Compound

A. Synthesis of 1-(dimethylchlorosilyl)-2-(p,m-chloromethyl-phenyl)ethane (1):

Into a 100 ml flask were charged 10g of 1-(dimethylchlorosily)-2-(p,m chloro-methylphenyl)ethane and 50 g of $H_2O$. The mixture was stirred at room temperature for 4 hours. Next, 50 ml of ether was added to the flask and the flask contents were stirred for 15 minutes. The flask contents were then transferred to a separatory funnel. The ether layer was separated out and washed with 50 ml of $H_2O$ each four times. The ether layer was dried over anhydrous $MgSO_4$, filtered and rotary evaporated out to remove the solvent. A viscous colorless liquid was obtained.

B. Synthesis of

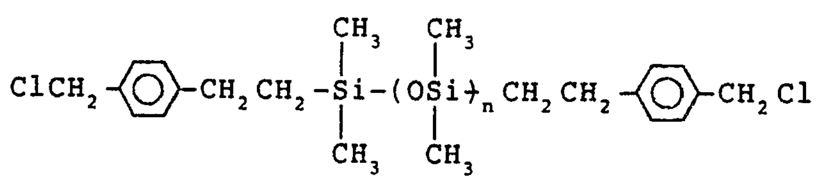 (2)

Into a 250 ml three necked flask fitted with a magnetic stirrer, condenser, thermometer and nitrogen in/outlet were charged compound (1) from Step A (6.05 g), $D_4$ (61 g) and Darco 60 carbon black (6.7 g). After stirring the mixture for 10 minutes, $H_2SO_4$ (0.34 g) was added. The mixture was heated at 90 °C for 6 hours while the system was kept under nitrogen atmosphere. The mixture was then filtered. The viscous liquid was placed in a vacuum oven at 90 °C overnight.

C. Synthesis of

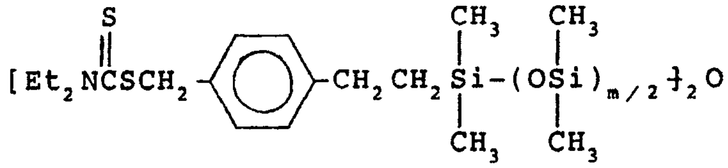

(3):

Into a 100 ml flask were charged compound (2) (10.2 g) from Step B, 1.2 g of

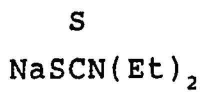

and 20 g of THF. The mixture was stirred overnight at room temperature. A solid precipitate of NaCl was formed. The reaction mixture was filtered and the THF was rotary evaporated out at 50° C. A viscous clear liquid was obtained. Hexane (50 g) was added to the liquid. The hexane layer was washed 5 times with water. The hexane layer was dried over anhydrous $MgSO_4$, filtered and dried by rotary evaporation. A viscous liquid was obtained for which $^1H$ NMR and IR spectroscopy revealed the formation of compound (3). GPC analysis revealed $\overline{M}n$ = 7,674 and $\rho$=3.1.

<u>Example 21</u>

<u>Differential Photocalorimetry Studies Comparing The Rate of Reaction In The Presence And In The Absence of Stannous 2-ethylhexanoate:</u>

(i) <u>Reaction of BA with XDC in the Presence of Stannous 2-ethylhexanoate:</u>

Into a 10 ml volume vial was charged 5g BA, 0.0286 g XDC and 0.3 g (2 mole %) stannous 2-ethylhexanoate. The vial was then sealed and shaken to mix the vial contents in order to form a solution. Into a circular pan having a diameter of 6.6 mm and a de[th of 1.6mm pan, was charged 14.4 mg of the above solution. The pan was placed in the photocell chamber of a Differential Photocalorimetor (model #930, DuPont). The cell was kept under nitrogen atmosphere and the sample was irradiated by a high pressure mercury 200 Watt arc lamp for 2 minutes. The observed enthalpy was 241.9 J/g.

(ii) <u>Reaction of BA with XDC:</u>

A solution was made by mixing 5 g BA and 0.0286 g XDC according to the procedure of Example 21(i). A 13.6 mg sample of the solution was irradiated for 2 minutes as in Example 21(i). An enthalpy of 34.5 J/g was observed. Thus, Examples 21(i) and Example 21(ii) demonstrated that the photoiniferter polymerization of BA in the presence of stannous 2-ethylhexanoate occurred seven times faster than in the absence of stannous 2-ethylhexanoate.

(iii) <u>Reaction of MMA with XDC in the Presence of Stannous 2-ethylhexanoate:</u>

Following the procedure described in Example 21(i), a solution was prepared by mixing 10 g of MMA, 0.06 g of XDC and 0.6 g of stannous 2-ethylhexanoate. A 10.0 mg sample of the above solution was irradiated for 2 minutes as described in Example 21(i). An enthalpy of 23.6 J/g was observed.

(iv) <u>Reaction of MMA with XDC:</u>

Following the procedure described in Example 21(i), a solution of 10 g MMA and 0.06 g XDC was prepared and a 13.9 mg sample was irradiated for 2 minutes as in Example 1. No heat of evolution was observed indicating that no reaction occurred.

(v) <u>Reaction of Siloxane Iniferter with BA in the Presence of Stannous 2-ethylhexanoate:</u>

Following the procedure described in Example 21(i) a solution of 0.27 g siloxane iniferter from Example

20 (m.w. = 7,674) of the formula

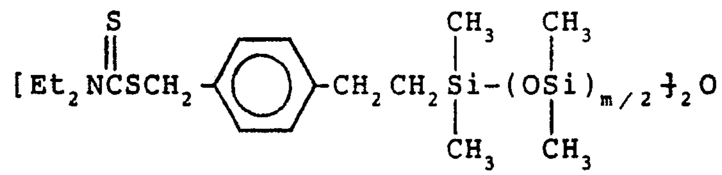

0.4 g BA and 0.02 g (1.58 mole %) stannous 2-ethylhexanoate was prepared. A 13.1 mg sample was irradiated following the procedure described in Example 21(i). An enthalpy of 133.6 J/g was observed.

(vi) Reaction of Siloxane Iniferter with BA:

A solution of 0.2 g siloxane iniferter from Example 20 and 0.4 g BA was prepared. A 10.8 mg sample of the solution was irradiated as in Example 21(i). An enthalpy of 44.0 J/g was observed. Thus, the reaction of the siloxane iniferter with BA in the presence of stannous 2-ethylhexanoate was three times faster than the siloxane iniferter reaction with BA in the absence of stannous 2-ethylhexanoate.

(vii) Reaction of Siloxane Iniferter with MMA in the Presence of Stannous 2-ethylhexanoate:

A solution of 0.27 g siloxane iniferter from Example 20, 0.8 g MMA, and 0.065 g (2 mole %) stannous 2-ethylhexanoate was prepared according to the procedure of Example 21(i). A 14.1 mg portion of this sample was irradiated following the procedure described in Example 21(i). An enthalpy of 31.4 J/g was observed.

(viii) Reaction of Siloxane Iniferter with MMA:

A solution of 0.1 g of siloxane iniferter from Example 20 and 0.3 g MMA was prepared. A 12.2 mg sample of the solution was irradiated according to the procedure of Example 21(i). An enthalpy of 10.5 J/g was observed.

Since the rate of reaction is directly proportional to the rate of heat evolution (i.e., enthalpy) Example 21 thus demonstrates that for photoiniferter reactions whether monoiniferters or macroiniferters are used, the rate of polymerization are much greater in the presence of the metal compound accelerator than in absence of the metal compound accelerator.

While this invention has been described in connection with specific embodiments, it should be understood that it is capable of further modification. The claims herein are intended to cover those variations which one skilled in the art would recognize as the chemical equivalent of what has been described here.

## Claims

**1.** A method of making a polymer which comprises

mixing (i) an iniferter represented by the general formula $I(T)_n$, capable upon being subjected to an appropriate energy source of forming a terminator free radical of the formula $nT^\bullet$ and an initiator free radical of the formula $I(^\bullet)_n$ wherein n is an integer of at least 1, wherein the initiator free radical $I^\bullet$ is a highly reactive free radical capable of initiating free radical polymerization, and the terminator free radical $T^\bullet$ is a less reactive free radical which is generally much less capable of initiating free radical polymerization of free radically polymerizable monomer but capable of rejoining with $I(^\bullet)_n$ or a free radical polymer segment free radically polymerized with $I(^\bullet)_n$ upon termination of said energy source and (ii) a first monomer charge comprising free radically polymerizable monomer in order to form a first mixture;

exposing the mixture to an energy source capable of forming free radicals $I^\bullet$ and $nT^\bullet$;

maintaining the exposure until said free radically polymerizable monomer of said first monomer charge polymerizes with $I^\bullet$ to form a free radical polymer segment represented by the formula $IA'^\bullet$, wherein A' comprises a polymer block comprising polymerized free radically polymerizable monomer of said first monomer charge;

terminating said exposure, whereby $I(A'^\bullet)_n$ and $nT^\bullet$ combine to form a polymer represented by the formula $I(A'T)_n$ or alternatively maintaining the exposure of $I(A'^\bullet)_n$ and $nT^\bullet$ to said energy source;

optionally mixing $I(A'T)_n$ or mixing $I(A'^\bullet)_n$ and $nT^\bullet$ with a second monomer charge comprising free radically polymerizable monomer in order to form a second mixture;
exposing the mixture of $I(A'T)_n$ and said second monomer charge to an energy source capable of forming free radicals $I(A'^\bullet)_n$ and $nT^\bullet$ or alternatively maintaining the exposure of $I(A'^\bullet)_n$ and $nT^\bullet$, which is mixed with said second monomer charge, to said energy source;
maintaining said exposure until the free radically polymerizable monomer of said second monomer charge polymerizes with the free radical $I(A'^\bullet)_n$ to form a free radical copolymer segment represented by the formula $I(A'A''^\bullet)_n$ wherein A" comprises a polymer block comprising polymerized free radically polymerizable monomer of said second monomer charge;
and terminating said exposure whereby $I(A'A''^\bullet)_n$ and $nT^\bullet$ ccmbine to form a block copolymer represented by the formula $I(A'A''T)_n$:
wherein the improvement comprises adding a polymerization accelerating amount of at least one metal compound, wherein said metal compound is present during the polymerization of at least one monomer charge, and wherein said metal compound does not interact with said free radically polymerizable monomer of said first monomer charge or said free radically polymerizable monomer of said second monomer charge in order to form an insoluble compound in an amount which would substantially interfere with the free radical polymerization of said free radically polymerizable monomer of said first monomer charge or said free radically polymerizable monomer of said second monomer charge and wherein $I(A'T)_n$ or $I(A'A''T)_n$ is characterized by including residual metal compound.

**2.** The method of claim 1 wherein the metal compound is represented by the general formula $M_xL_z$ wherein
M is a cation having a valency of z of a metal which is selected from the group consisting of tin, zinc, cobalt, titanium, palladium, and lead;
x is an integer of at least 1;
L is an anion having a valency of x which is selected from the group consisting of $C_{1-20}$ alkyl, -aryl, -OR,

$$-O-\overset{\overset{\displaystyle O}{\|}}{C}-R,$$

$NO_3^-$, $SO_4^=$, and $PO_4^{-3}$;
R is selected from the group consisting of $C_{1-20}$ alkyl, aryl; and
z is an integer of at least 1.

**3.** The method of claim 2 wherein the metal compound is selected from the group consisting of stannous 2-ethylhexanoate, zinc 2-ethylhexanoate, and mixtures thereof.

**4.** The method of claim 1 wherein said polymerization accelerating amount is about 0.1 to about 10 mole % of metal compound based upon the monomer charge to which the metal compound is added.

**5.** The method of claim 4 wherein said polymerization accelerating amount is about 1 to about 3 mole % of metal compound based upon the monomer charge to which the metal compound is added.

**6.** A method of making a pressure-sensitive adhesive composition comprising the method of claim 1 wherein said iniferter is represented by the general formula $I(T)_n$ wherein n is an integer of at least 2 and wherein said first monomer charge comprises acrylic monomer which is free radically polymerizable in the presence of $I(^\bullet)_n$ to form an acrylic polymer block having a glass transition temperature of less than 0° C and said second monomer charge comprises monomer which is free radically polymerizable in the presence of $I(A'^\bullet)_n$ to form a thermoplastic block having a glass transition temperature of at least 30° C;
and the further step of adding sufficient compatible tackifier to said second monomer charge, $I(A'^\bullet)_n$ and nT, or $I(A'A''T)_n$ in order to endow $I(A'A''T)_n$ with adhesive tack and the further step of coating a backing with said pressure sensitive adhesive composition.

**7.** A method of making an acrylic block copolymer comprising the method of claim 1 wherein said iniferter is represented by the general formula $I(T)_n$ wherein n is an integer of at least 2 and said first monomer

charge is selected from the group consisting of (i) acrylic monomer polymerizable to form an acrylic polymer block having a glass transition temperature of less than 0° C and (ii) monomer polymerizable to form a thermoplastic polymer block having a glass transition temperature of at least 50° C which is free radically polymerizable in the presence of $I(\bullet)_n$ to form a first polymer block; and including the addition of a second monomer charge, wherein said second monomer charge is a member of the group consisting of monomer (i) and monomer (ii) which was not selected as said first monomer charge, said second monomer charge comprising monomer which is free radically polymerizable in the presence of $I(A'\bullet)_n$ to form a second polymer block.

**8.** The method of claim 7 which further comprises the step of forming a sheet material from the block polymer $I(A'A''T)_n$.

**9.** A method of making a vinyl-siloxane copolymer comprising the method of claim 1 wherein said iniferter is represented by the general formula

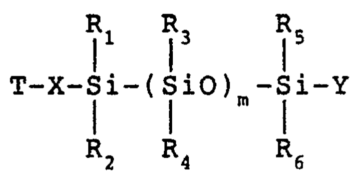

wherein T and x are organic groups selected so that the T-X bond is capable of dissociating upon being subjected to an appropriate energy source to form a terminator free radical of the formula T• and an initiator free radical of the formula

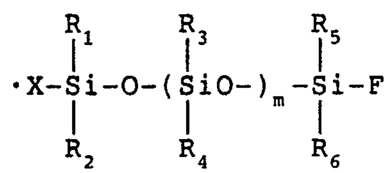

said initiator free radical being sufficiently reactive to initiate free radical polymerization of free radically polymerizable monomer and said terminator free radical being insufficiently capable of initiating free radical polymerization of free radically polymerizable monomer but capable of rejoining with said initiator free radical or a free radical polymer segment free radically polymerized with said initiator free radical;
wherein $R_1$, $R_2$, $R_5$, and $R_6$ are monovalent moieties selected from the group consisting of hydrogen, $C_{1-4}$ alkyl, $C_{1-4}$ alkoxy and aryl which can be the same or are different;
$R_3$ and $R_4$ are monovalent moieties which can be the same or different selected from the group consisting of $C_{1-4}$ alkyl, $C_{1-4}$ fluoralkyl including at least one fluorine atom and aryl;
$R_1$, $R_2$, $R_3$, $R_4$, $R_5$, and $R_6$ are selected so that they do not prevent said initiator free radical from initiating free radical polymerization or the combining of said terminator free radical with said initiator free radical or a polymer free radical segment including said initiator free radical;
Y is selected from the group consisting of -X-T and -z wherein X and T are defined above and Z is an organic moiety that will not dissociate to form free radicals when subjected to said energy source;
F is selected from the group consisting of -X• and -Z;
m is an integer of 10 or greater;
said exposing the first mixture to an energy source forms free radicals T• and

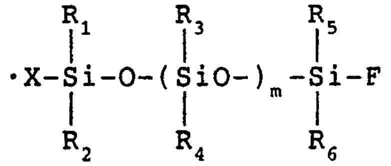 ;

said maintaining the exposure results in the polymerization of said initiator radical and said free radically polymerizable monomer of said first monomer charge to form a free radical block copolymer segment represented by the formula

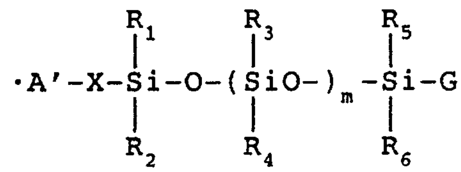

wherein A' represents a polymer block comprising polymerized free radically polymerizable monomer of said first monomer charge; and

G is selected from the group consisting of -z and -X-A'•;

said terminating said exposure forms a block copolymer represented by the formula

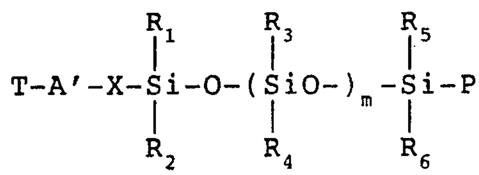

wherein P is selected from the group consisting of -X-A'-T and -Z, wherein X, A', T, and Z are defined above or alternatively maintaining said exposure of

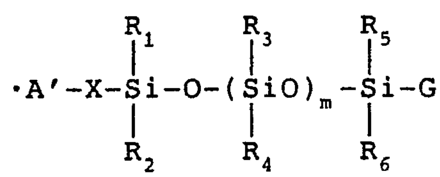

and T•-;

said optionally mixing

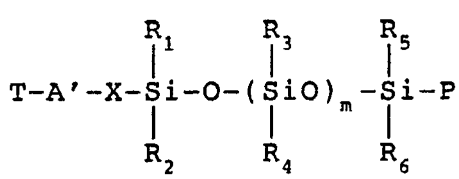

or said mixing nT• and

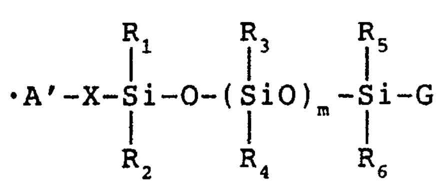

with said second monomer charge comprising free radically polymerizable monomer forms said second mixture;

said exposing said mixture of

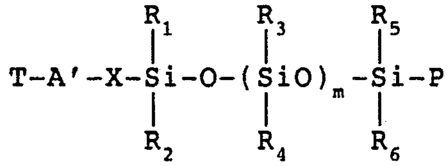

and said second monomer charge to an energy source capable of forming free radical T• and

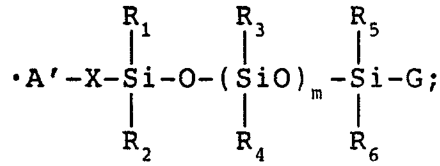

or alternatively maintaining said exposure of

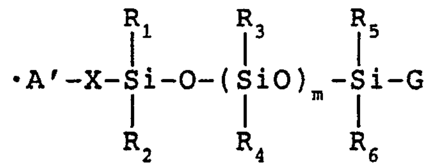

and nT•, which is mixed with said second monomer charge, to said energy source;
said maintaining said exposure results in the polymerization of said free radically polymerizable monomer with the free radical

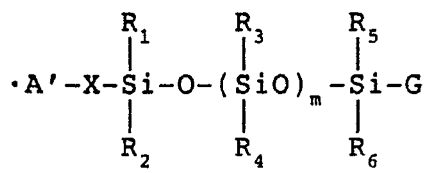

to form a free radical block copolymer segment represented by the formula

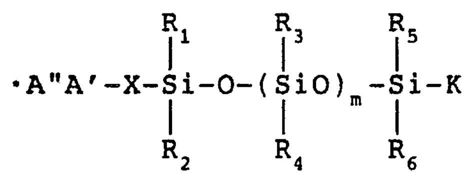

wherein A" represents a polymer block comprising polymerized free radically polymerizable second monomer; and
K is selected from the group consisting of -X-A'-A"• and -Z; and
said terminating said exposure results in the combining of

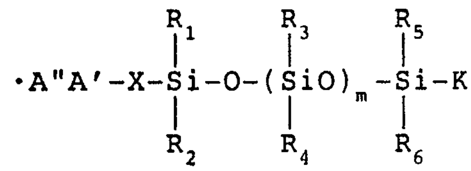

and T• to form a block copolymer represented by the formula

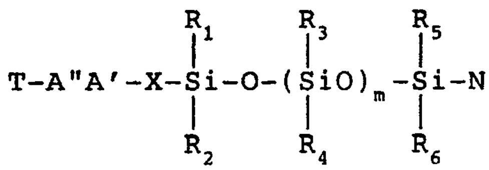

wherein N is selected from the group consisting of -X-A'A"T and -Z.

**10.** A method of making a coated sheet material comprising the steps of claim 9 and the further steps of providing a flexible sheet and coating at least one major portion of said flexible sheet with a release coating wherein said release coating is formed according to the method of claim 9 and comprises a block copolymer having a formula selected from the group consisting of AB and ABA,
wherein A comprises at least one vinyl polymeric block, wherein each polymeric block comprises polymerized free radically polymerizable monomer, wherein each polymeric block has a $T_g$ or $T_m$ above about -20° C and wherein A comprises at least about 40 weight percent of said block copolymer, and
wherein B is a siloxane polymeric block having a number average molecular weight above about 1000, and wherein the weight percent of the siloxane polymeric block is great enough to provide said block copolymer with a surface release value not greater than about 50 Newtons/dm.

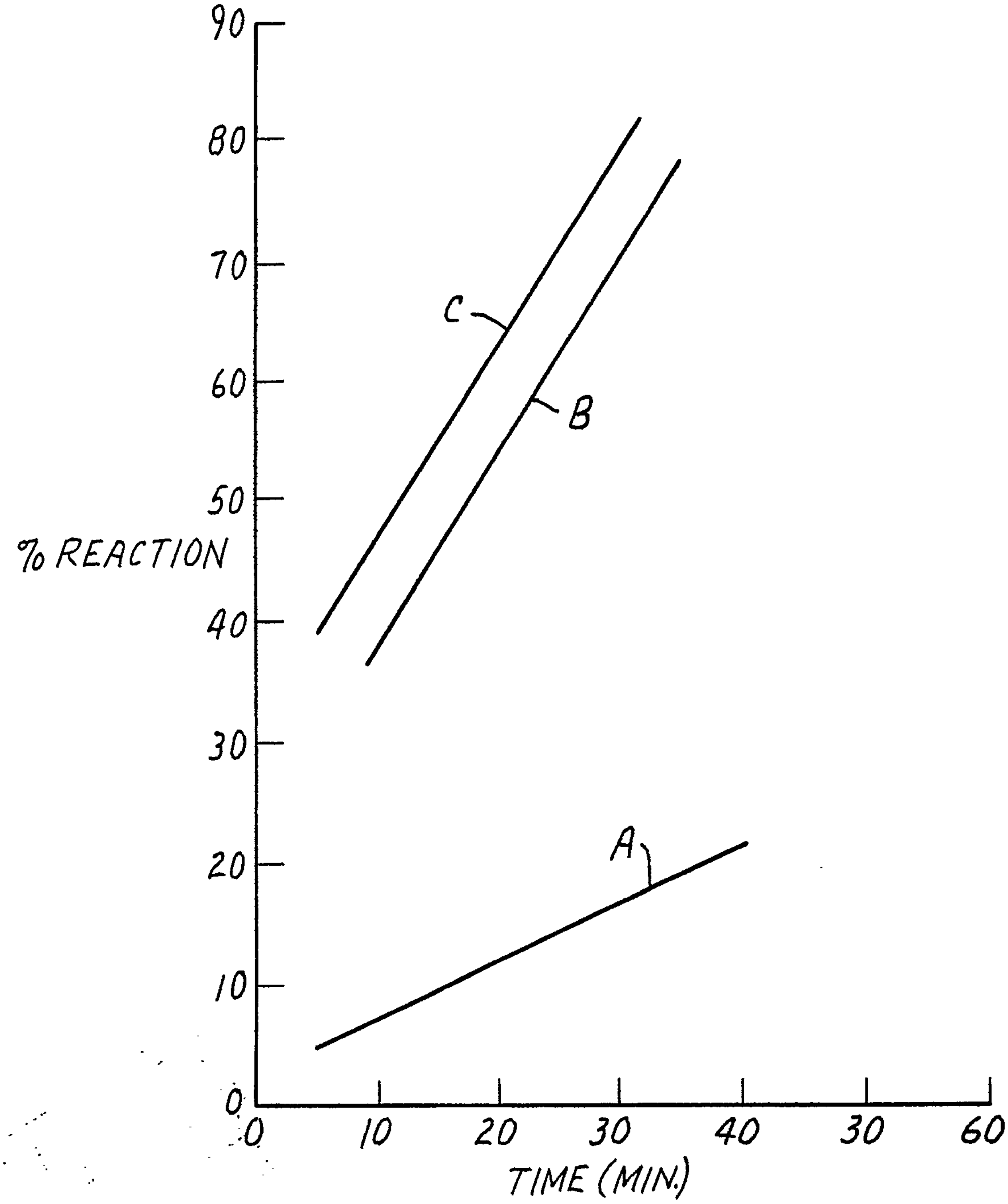
90
80
70
60
50
% REACTION
40
30
20
10
0
C
B
A
0
10
20
30
40
30
60
TIME (MIN.)

FIG. 1

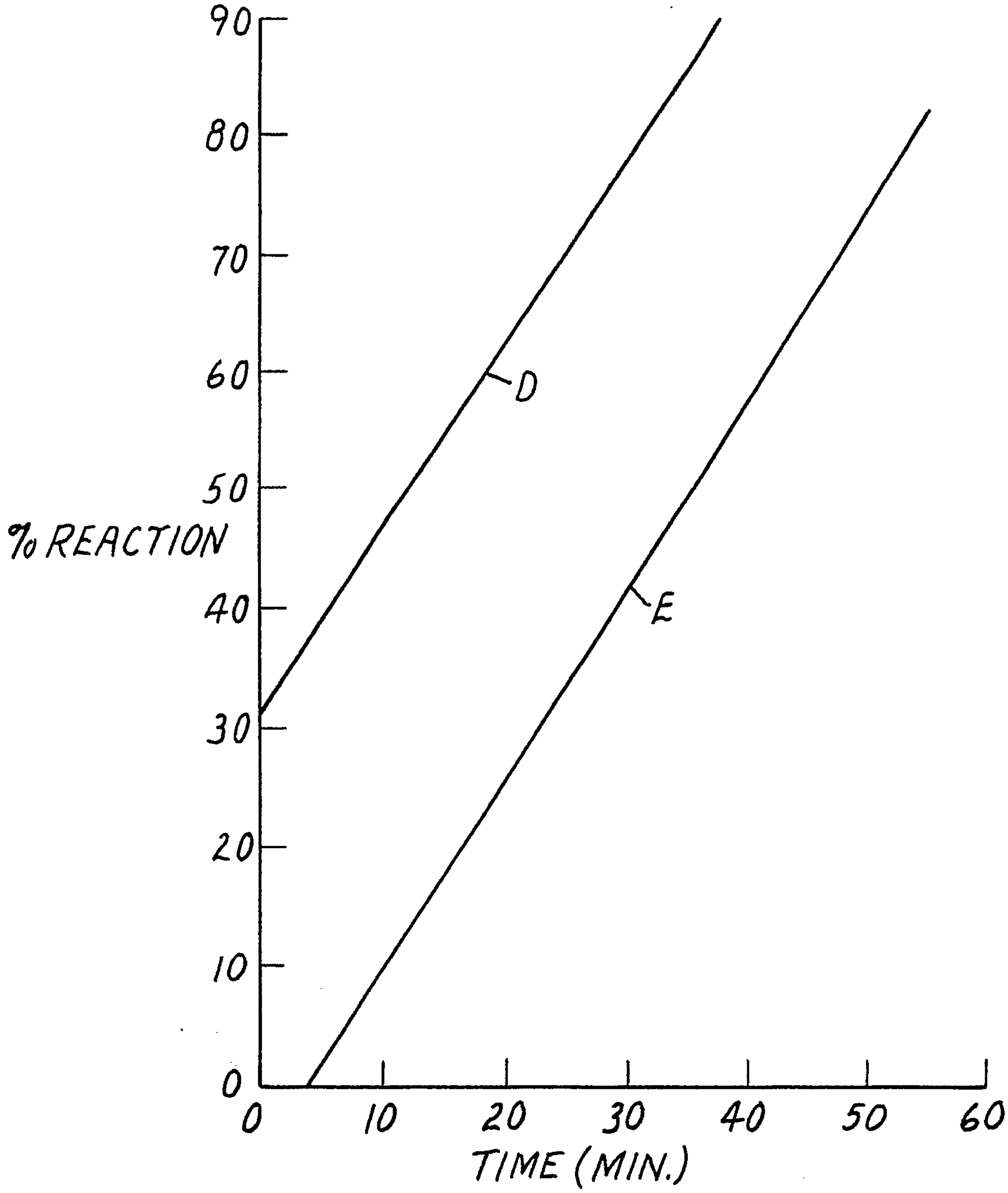


FIG. 2